(19) Europäisches Patentamt
European Patent Office
Office européen des brevets

(11) **EP 3 361 220 B1**

(12) **EUROPÄISCHE PATENTSCHRIFT**

(45) Veröffentlichungstag und Bekanntmachung des Hinweises auf die Patenterteilung:
**14.08.2019   Patentblatt 2019/33**

(51) Int Cl.:
***G01D 5/00*** *(2006.01)*

(21) Anmeldenummer: **18155780.2**

(22) Anmeldetag: **08.02.2018**

(54) **POSITIONSBESTIMMUNG EINES BEWEGLICHEN ELEMENTS**

DETERMINING THE POSITION OF A MOVEABLE ELEMENT

DÉTERMINATION DE POSITION D'UN ÉLÉMENT MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2017   DE 102017102494**

(43) Veröffentlichungstag der Anmeldung:
**15.08.2018   Patentblatt 2018/33**

(73) Patentinhaber: **Beckhoff Automation GmbH
33415 Verl (DE)**

(72) Erfinder: **Kaulmann, Tim
33104 Paderborn (DE)**

(74) Vertreter: **Patentanwaltskanzlei WILHELM & BECK
Prinzenstraße 13
80639 München (DE)**

(56) Entgegenhaltungen:
**EP-A1- 2 937 671          DE-A1- 10 050 795
DE-A1-102011 103 735    US-A1- 2012 072 169**

**Beschreibung**

Die Erfindung betrifft ein Verfahren zur Positionsbestimmung eines beweglichen Elements, ein System zur Positionsbestimmung eines beweglichen Elements und ein Maschinensystem mit einer Maschine und einem System zur Positionsbestimmung eines beweglichen Elements.

Verfahren und Systeme zur Positionsbestimmung beweglicher Elemente von Maschinen werden unter anderem in der Automatisierungstechnik eingesetzt. Bei den Maschinen kann es sich unter anderem um Elektromotoren von Antrieben handeln, aber auch um Maschinen, deren bewegliche Elemente von Elektromotoren angetrieben werden, etwa Transportbänder oder Verpackungsmaschinen. Insbesondere können Verfahren und Systeme zur Positionsbestimmung beweglicher Elemente bei Feedbacksystemen eingesetzt werden, um eine Positionsinformation zu ermitteln, welche in ein Regelsystem zur Positionierung des beweglichen Elements zurückgespeist wird.

Die Position des beweglichen Elements wird in der Regel aus Mess- bzw. Positionssignalen eines Positionserfassungssystems errechnet. Die Messsignale werden in der Regel von einer Signalerfassungseinrichtung des Positionserfassungssystems erzeugt. Die Signalerfassungseinrichtung wirkt mit einem Positionsgeber zusammen und erzeugt abhängig von der relativen Lage zwischen Positionsgeber und Signalerfassungseinrichtung ein elektrisches Signal.

Das Bestimmen der Position des beweglichen Elements aus dem Messsignals erfolgt in der Regel mittels eines Vergleichs des Messsignals mit hinterlegten Messsignalen bekannter Positionen, etwa unter Anwendung von Ähnlichkeits- oder Korrelationsverfahren. Auch können zusätzlich mathematische Verfahren direkt auf die Messsignale angewendet werden. Durch den Vergleich mit den hinterlegten Messsignalen kann aus dem Messsignal die wahrscheinlichste Position des beweglichen Elements bestimmt werden. Die hinterlegten Messsignale bekannter Positionen können auch als Stützstellen für die Positionsbestimmung bezeichnet werden. Die Genauigkeit der Positionsbestimmung hängt dabei unter anderem ab von der Anzahl und dem Abstand der Positionen, für die die Messsignale hinterlegt wurden. Je mehr Messsignale hinterlegt sind, desto genauer kann die Position aus dem Messsignal ermittelt werden.

Die Anzahl der hinterlegten Messsignale bestimmt andererseits auch die Geschwindigkeit, mit der aus einem Messsignal die Position des beweglichen Elements errechnet werden kann. Je mehr Messsignale hinterlegt wurden, desto länger dauern der Vergleich und damit die Bestimmung der Position. Oftmals werden die hinterlegten Messsignale in einem Speicherbaustein hinterlegt, so dass die hinterlegten Messsignale für den Vergleich zunächst aus dem Speicherbaustein geladen werden müssen, was zusätzliche Zeit in Anspruch nimmt. Die Geschwindigkeit, mit der die Position aus dem Messsignal bestimmt werden kann, beeinflusst bei Feedbacksystemen auch die Geschwindigkeit der Regelschleife.

Druckschrift EP 2 937 671 A1 beschreibt einen Absolutcodierer zur Positionserfassung eines Schlittens. Druckschrift US 2012/072169 A1 beschreibt ein Verfahren zur Positionsmessung, bei dem Abweichungen zwischen einer gemessenen und einer extrapolierten Position festgestellt und gespeichert werden. Druckschrift DE 10 2011 103735 A1 beschreibt ein Verfahren und eine Vorrichtung zur Übertragung von Positionswerten von Objekten mit träger Masse. Druckschrift DE 100 50 795 A1 beschreibt ein Verfahren und eine Vorrichtung zum Scannen einer Werkstückkontur auf einem Messgerät.

Aufgabe der vorliegenden Erfindung ist es, ein Verfahren zur Positionsbestimmung eines beweglichen Elements, ein System zur Positionsbestimmung eines beweglichen Elements und ein Maschinensystem mit einer Maschine und einem System zur Positionsbestimmung eines beweglichen Elements anzugeben.

Diese Aufgabe wird durch ein Verfahren zur Positionsbestimmung, ein System zur Positionsbestimmung und ein Maschinensystem gemäß den unabhängigen Ansprüchen gelöst. Weiterbildungen sind jeweils in den abhängigen Ansprüchen angeben.

Ein Verfahren zur Positionsbestimmung eines innerhalb eines Gesamtbereichs beweglichen Elements einer Maschine aus einem Messsignal umfasst als einen Schritt ein Bestimmen eines Grenzwerts eines innerhalb des Gesamtbereichs liegenden Teilbereichs von zu einem vorgegebenen Zeitpunkt möglichen Positionen des beweglichen Elements unter Berücksichtigung einer eine Anfangsposition bildenden ersten Position des beweglichen Elements und einer vorgegebenen Randbedingung für eine Bewegung des beweglichen Elements. Das Verfahren umfasst als weitere Schritte ein Einlesen des Messsignals und ein Bestimmen einer zweiten Position des beweglichen Elements als einer Endposition aus dem Messsignal unter Berücksichtigung lediglich des Teilbereichs der zu dem vorgegebenen Zeitpunkt möglichen Positionen.

Bei der Bestimmung der zweiten Position aus dem Messsignal wird also anstelle des Gesamtbereichs, innerhalb dessen das bewegliche Element insgesamt bewegbar ist, lediglich der Teilbereich möglicher Positionen herangezogen, in dem sich das bewegliche Element zu dem vorgegebenen Zeitpunkt befinden kann. Insbesondere kann der Teilbereich kleiner sein als der Gesamtbereich, so dass bei der Bestimmung der zweiten Position weniger mögliche Positionen berücksichtigt werden müssen als bei einer Berücksichtigung des vollständigen Gesamtbereichs. Dies ermöglicht es, die zweite Position bei vorgegebener Genauigkeit der Positionsbestimmung schneller und effizienter, insbesondere energieeffizienter, zu bestimmen oder aber die zweite Position bei vorgegebener Dauer der Positionsbestimmung genauer zu bestimmen. Eine schnellere Positionsbestimmung kann auch die Totzeit eines das Verfahren anwendenden Systems verringern, insbesondere die Totzeit eines das Verfahren anwendenden Feedbacksystems.

Das bewegliche Element, dessen Position bestimmt wird, kann beispielsweise rotatorisch beweglich sein, etwa bei einer als ein rotatorischer Elektromotor ausgebildeten Maschine, es kann aber auch translatorisch beweglich sein, etwa bei einer als Linearmotor ausgebildeten Maschine. Bei einem rotatorischen Elektromotor kann das bewegliche Element unter anderem ein Rotor des Elektromotors oder eine mit dem Rotor verbundene Welle sein. Bei einem Linearmotor kann das bewegliche Element ein Schlitten oder Läufer des Linearmotors oder ein Element eines durch einen solchen Schlitten oder Läufer angetriebenen Maschinenteils sein.

Handelt es sich bei dem beweglichen Element um ein rotatorisch bewegliches Element, so kann die Position beispielsweise eine Winkelposition sein und eine durch einen Winkel beschreibbare Stellung des in der Regel kreisförmig beweglichen Elements beschreiben. In solch einem Fall kann der Gesamtbereich beispielsweise alle Positionen innerhalb einer vollständigen Umdrehung des beweglichen Elements umfassen.

Handelt es sich bei dem beweglichen Element um ein linear bewegliches Element, so kann die Position beispielsweise auf einer linearen Skala beschrieben werden, etwa durch einen Abstand zu einer ausgezeichneten Position des beweglichen Elements. Der Gesamtbereich kann dann alle Positionen entlang der maximal möglichen Verfahrstrecke des beweglichen Elements umfassen.

Bei einer Weiterbildung des Verfahrens wird zu dem vorgegebenen Zeitpunkt das Messsignal erfasst. Damit ist der vorgegebene Zeitpunkt, für den die dann möglichen Positionen des beweglichen Elements bestimmt werden, der Zeitpunkt der Erfassung des Messsignals. Dadurch kann sichergestellt werden, dass der Grenzwert des Teilbereichs bzw. der Teilbereich derart bestimmt werden, dass die durch das Messsignal repräsentierte Position auch innerhalb des Teilebereichs liegt.

Bei einer Weiterbildung des Verfahrens erfolgt das Bestimmen des Grenzwerts unter Berücksichtigung eines Maschinenzustandes der Maschine als vorgegebener Randbedingung. Der Maschinenzustand kann beispielsweise als ein gemessener Maschinenzustand aus Messwerten von an der Maschine angeordneten Sensoren ermittelt werden. Insbesondere kann der gemessene Maschinenzustand basierend auf Messwerten eines Motorstroms eines das bewegliche Element antreibenden Elektromotors oder basierend auf Messwerten eines Magnetfelds oder eines magnetischen Flusses einer Spule oder mehrerer Spulen eines solchen Elektromotors ermittelt werden.

Der Maschinenzustand kann auch aus vorangegangenen Positionen des beweglichen Elements ermittelt werden. Beispielsweise kann der Maschinenzustand aus zwei vorangegangenen Positionen ermittelt werden. Beispielsweise kann der Maschinenzustand aus zwei vorangegangenen Positionen als eine gemessene Geschwindigkeit des beweglichen Elements ermittelt werden.

Der gemessene Maschinenzustand kann auch ermittelt werden basierend auf Sensordaten von Sensoren, die eine ungefähre Position des beweglichen Elements der Maschine erfassen. Beispielsweise können die Sensoren eine Anwesenheit des beweglichen Elements in dem Teilbereich detektieren. Bei einem solchen Sensor kann es sich beispielsweise um eine Lichtschranke handeln, die an einer durch den Grenzwert des Teilbereichs vorgegebenen Position innerhalb des Gesamtbereichs angeordnet ist. Auch kann der Maschinenzustand mittels bereits in einer Steuerung der Maschine vorliegender Messwerte ermittelt werden, so dass insbesondere eine schnelle Bestimmung des Maschinenzustandes bzw. der vorgegebenen Randbedingung möglich ist.

Bei einer Weiterbildung des Verfahrens erfolgt das Bestimmen des Grenzwerts unter Berücksichtigung einer vorgegebenen Geschwindigkeit des beweglichen Elements als vorgegebener Randbedingung. Damit können der Grenzwert und damit der bei der Bestimmung der zweiten Position zu berücksichtigende Teilbereich auf einfache Weise festgelegt werden.

Bei der vorgegebenen Geschwindigkeit kann es sich um eine statisch vorgegebene Geschwindigkeit des beweglichen Elements handeln, beispielsweise um eine Geschwindigkeit, die bei einer zyklischen Positionsbestimmung für alle Zyklen vorgegeben ist. Die vorgegebene Geschwindigkeit kann auch dynamisch während der Bewegung des beweglichen Elements vorgegeben sein, beispielsweise lediglich für einen oder mehrere der Zyklen zur Positionsbestimmung. Die vorgegebene Geschwindigkeit kann basierend auf kinematischen Eigenschaften der Maschine vorgegeben werden, beispielsweise basierend auf einer maximalen Antriebskraft der Maschine und/oder einer bei einer Steuerung oder Regelung der Maschine verwendeten vorgegebenen Geschwindigkeit. Beispielsweise kann es sich bei der vorgegebenen Geschwindigkeit um eine Maximalgeschwindigkeit oder Minimalgeschwindigkeit des beweglichen Elements handeln. Die vorgegebene Geschwindigkeit kann bei einer zyklischen Positionsbestimmung auch für einen Zyklus des Verfahrens neu bestimmt werden, beispielsweise als eine aktuelle Geschwindigkeit des beweglichen Elements. Bei einem rotatorisch beweglichen Element kann die vorgegebene Geschwindigkeit auch eine Drehzahl sein.

Die vorgegebene Geschwindigkeit kann auch durch einen Maschinenzustand der Maschine vorgegeben sein. Beispielsweise kann die vorgegebene Geschwindigkeit durch den Maschinenzustand dynamisch vorgegeben werden. Beispielsweise kann die vorgegebene Geschwindigkeit durch einen gemessenen Maschinenzustand vorgegeben werden bzw. aus einem gemessenen Maschinenzustand berechnet werden. Bei dem gemessenen Maschinenzustand kann es sich beispielsweise um einen von einem Sensor oder von mehreren Sensoren der Maschine gemessenen Zustand handeln. Beispielsweise kann es sich bei dem gemessenen Maschinenzustand um einen Motorstrom handeln, mit dem ein das bewegliche Element antreibender Elektromotor beaufschlagt wird. Es kann sich bei dem gemessenen Maschinenzustand auch um einen magnetischen Fluss in einer Antriebsspule oder in mehreren Antriebsspulen eines das bewegliche Element antreibenden Elektromotors handeln. Die vorgegebene Geschwindigkeit kann dann aus einer bekannten Beziehung zwischen Stromwert bzw. magnetischem Fluss und Geschwindigkeit des beweglichen Elements bestimmt werden. Eine vorgegebene Geschwindigkeit, die durch einen gemessenen Maschinenzustand vorgegeben wird, kann auch als gemessene Geschwindigkeit bezeichnet werden.

Bei einer Weiterbildung des Verfahrens erfolgt das Bestimmen des Grenzwerts unter Berücksichtigung einer vorgegebenen Beschleunigung des beweglichen Elements als vorgegebener Randbedingung. Dadurch wird ein besonders genaues Bestimmen des Grenzwerts ermöglicht, so dass der Teilbereich, der beim Bestimmen der zweiten Position heranzuziehen ist, besonders klein ist. Die vorgegebene Beschleunigung kann insbesondere eine maximale Beschleunigung oder eine minimale Beschleunigung bzw. maximale Verzögerung des beweglichen Elements sein. Die minimale Beschleunigung kann insbesondere negativ sein.

Bei einer Weiterbildung des Verfahrens umfasst das Verfahren ein Bestimmen eines weiteren Grenzwerts des Teilbereichs der zu dem vorgegebenen Zeitpunkt möglichen Positionen unter Berücksichtigung einer weiteren vorgegebenen Beschleunigung des beweglichen Elements als vorgegebener Randbedingung. Damit kann der Teilbereich in beide Richtungen eingegrenzt werden. Die weitere vorgegebene Beschleunigung kann auf die gleiche Art und Weise vorgegeben sein wie die vorgegebene Beschleunigung. Die weitere vorgegebene Beschleunigung kann insbesondere eine minimale Beschleunigung bzw. maximale Verzögerung des beweglichen Elements sein.

Die vorgegebene Beschleunigung oder die weitere vorgegebene Beschleunigung können auch durch einen Maschinenzustand der Maschine vorgegeben sein. Insbesondere kann die vorgegebene Beschleunigung oder die weitere vorgegebene Beschleunigung durch einen gemessenen Maschinenzustand der Maschine vorgegeben sein. Beispielsweise kann die vorgegebene Beschleunigung oder die weitere vorgegebene Beschleunigung durch einen Motorstrom, ein Magnetfeld oder einen magnetischen Fluss einer Antriebsspule eines das bewegliche Element antreibenden Elektromotors vorgegeben sein.

Bei einer Weiterbildung des Verfahrens werden das Bestimmen des Grenzwerts, das Einlesen des Messsignals und das Bestimmen der zweiten Position zyklisch wiederholt und die in einem vergangenen Zyklus bestimmte Endposition wird in einem dem vergangenen Zyklus nachfolgenden aktuellen Zyklus als die erste Position berücksichtigt. Dadurch kann der Teilbereich der zu dem vorgegebenen Zeitpunkt möglichen Positionen iterativ aus den in den vergangenen Zyklen bestimmten Endpositionen bestimmt werden. Ein iteratives Vorgehen ermöglicht insbesondere ein genaues Bestimmen des Teilbereichs.

Einer der Zyklen umfasst damit das Bestimmen des Grenzwerts, das Einlesen des Messsignals und das Bestimmen der zweiten Position. Das Wiederholen der Zyklen kann in regelmäßigen Abständen erfolgen, es kann aber auch in unregelmäßigen Abständen erfolgen. Das Bestimmen des Grenzwerts, das Einlesen des Messsignals und das Bestimmen der zweiten Position wird dadurch zyklisch wiederholt, dass der aus den genannten Schritten bestehende Zyklus jeweils wenigstens zwei Mal ausgeführt wird.

Bei einer Weiterbildung des Verfahrens erfolgt das Bestimmen des Grenzwerts unter Berücksichtigung der ersten Position, einer früheren Position des beweglichen Elements, einer ersten Zeitdauer und einer zweiten Zeitdauer. Dabei ist die frühere Position in einem dem vergangenen Zyklus vorangegangenen vorvergangenen Zyklus als die Endposition bestimmt und in dem vergangenen Zyklus als die Anfangsposition berücksichtigt worden. Die erste Zeitdauer gibt die Zeit zwischen dem vorgegebenen Zeitpunkt des vorvergangenen Zyklus und dem vorgegebenen Zeitpunkt des vergangenen Zyklus an, die zweite Zeitdauer gibt die Zeit zwischen dem vorgegebenen Zeitpunkt des vergangenen Zyklus und dem vorgegebenen Zeitpunkt des aktuellen Zyklus an.

Dadurch kann auf einfache Art und Weise eine Geschwindigkeit des beweglichen Elements aus zwei vergangenen Positionsbestimmungen als eine gemessene Geschwindigkeit ermittelt werden. Insbesondere kann die gemessene Geschwindigkeit aus der früheren Position und der Anfangsposition linearisiert bestimmt werden. Die gemessene Geschwindigkeit kann wiederum bei dem Bestimmen des Grenzwerts des bei der aktuellen Positionsbestimmung zu berücksichtigenden Teilbereichs verwendet werden. Dadurch ist eine besonders genaue Bestimmung des Teilbereichs möglich, so dass der Teilbereich besonders klein ist.

Die erste Position, die frühere Position die erste Zeitdauer und die zweite Zeitdauer können insbesondere einen Maschinenzustand der Maschine mit dem beweglichen Element definieren. Genauer gesagt, definieren sie einen gemessenen Maschinenzustand der Maschine.

Die erste Zeitdauer und die zweite Zeitdauer können unterschiedlich lang oder auch gleich lang sein. Bei der ersten und der zweiten Zeitdauer kann es sich um eine Zykluszeit zur Erfassung des Messsignals handeln. Beispielsweise kann die erste Zeitdauer die Zeit zwischen einem Erfassen eines für das Bestimmen der früheren Position verwendeten Messsignals und einem für das Bestimmen der Anfangsposition verwendeten Messsignals sein. Die zweite Zeitdauer kann beispielsweise die Zeit zwischen dem Erfassen des für das Bestimmen der Anfangsposition verwendeten Messsignals und dem für das Bestimmen der Endposition verwendeten Messsignals sein.

Insbesondere können die erste und die zweite Zeitdauer durch eine Updaterate der Messsignale gegeben sein, beispielsweise durch eine Updaterate eines Feedbacksystems. Die erste und die zweite Zeitdauer können statisch für alle Zyklen vorgegeben sein, sie können aber auch dynamisch während der Bewegung des beweglichen Elements bzw. während des Betriebs der Maschine jeweils nur für einen Zyklus oder für mehrere Zyklen vorgegeben werden.

Bei einer Weiterbildung des Verfahrens umfasst das Bestimmen der zweiten Position des beweglichen Elements einen Vergleich des Messsignals mit hinterlegten Messsignalen einer Teilmenge hinterlegter Messsignale, wobei die Teilmenge in einer Gesamtmenge hinterlegter Messsignale enthalten ist. Die hinterlegten Messsignale der Gesamtmenge repräsentieren Positionen des beweglichen Elements innerhalb des Gesamtbereichs und die hinterlegten Messsignale der Teilmenge repräsentieren jeweils nur Positionen des beweglichen Elements innerhalb des Teilbereichs der zu dem vorgegebenen Zeitpunkt möglichen Positionen, wobei die Teilmenge weniger hinterlegte Messsignale als die Gesamtmenge umfasst.

Durch einen Vergleich des Messsignals mit den hinterlegten Messsignalen kann auf besonders einfache Art und Weise die zweite Position bestimmt werden. Beispielsweise kann die zweite Position als eine wahrscheinlichste Position des beweglichen Elements bestimmt werden. Der Vergleich mit den hinterlegten Messsignalen kann beispielsweise unter Anwendung eines Ähnlichkeits- oder Korrelationsverfahrens erfolgen.

Indem das Messsignal nur mit den für den Teilbereich hinterlegten Messsignalen verglichen wird, müssen bei dem Vergleich nicht alle für den Gesamtbereich hinterlegten Messsignale herangezogen werden. Dies verringert die für das Bestimmen der zweiten Position benötigte Rechenzeit und erlaubt ein besonders schnelles Bestimmen der Position des beweglichen Elements.

Bei einer Weiterbildung des Verfahrens werden Positionen des beweglichen Elements innerhalb des Gesamtbereichs durch Datenelemente einer Datenstruktur repräsentiert, wobei Positionen innerhalb des Teilbereichs der zu dem vorgegebenen Zeitpunkt möglichen Positionen durch Datenelemente einer Teilmenge der Datenelemente der Datenstruktur repräsentiert werden. Der Grenzwert des Teilbereichs definiert ein Datenelement der Teilmenge der Datenstruktur. Die Teilmenge umfasst weniger Datenelemente als die gesamte Datenstruktur und das Bestimmen der zweiten Position des beweglichen Elements erfolgt unter Berücksichtigung lediglich der Teilmenge der Datenelemente der Datenstruktur.

Indem bei dem Bestimmen der zweiten Position lediglich die Datenelemente aus der Teilmenge herangezogen werden, wird die Anzahl bei der Positionsbestimmung zu berücksichtigender Datenelemente verringert. Dies erlaubt ein besonders schnelles Bestimmen der zweiten Position. Das durch den Grenzwert definierte Datenelement kann zwischen den Datenelementen innerhalb der Teilmenge und den Datenelementen außerhalb der Teilmenge liegen. Das durch den Grenzwert definierte Datenelement kann innerhalb der Datenstruktur insbesondere einen Anfang oder ein Ende der Teilmenge festlegen.

Bei einer Weiterbildung des Verfahrens umfasst das Verfahren ein Laden der Teilmenge der Datenelemente der Datenstruktur aus einem die Datenstruktur enthaltenden Speicherbaustein und das Laden der Datenelemente der Teilmenge der Datenstruktur aus dem Speicherbaustein erfolgt vor dem Bestimmen der zweiten Position.

Es können lediglich die beim Bestimmen der zweiten Position zu berücksichtigenden Datenelemente der Teilmenge aus der Datenstruktur geladen werden, nicht jedoch die restlichen Datenelemente der Datenstruktur. Ein Laden lediglich der Teilmenge verringert die Anzahl der zu ladenden Datenelemente und ermöglicht ein besonders schnelles Laden der für das Bestimmen der zweiten Position benötigten Datenelemente. Bei dem Speicherbaustein kann es sich insbesondere um einen externen Speicherbaustein handeln, der getrennt von einer Einrichtung zur Ausführung des Verfahrens zur Positionsbestimmung angeordnet ist. Werden die für das Bestimmen der zweiten Position benötigten Datenelemente in einen Arbeitsspeicher geladen, kann der Arbeitsspeicher besonders klein gehalten werden, wenn lediglich die Teilmenge, nicht aber alle Datenelemente der Datenstruktur in den Arbeitsspeicher geladen werden müssen. Insbesondere kann der Arbeitsspeicher weniger Speicherkapazität als der Speicherbaustein aufweisen.

Ein System zur Positionsbestimmung eines innerhalb eines Gesamtbereichs beweglichen Elements einer Maschine aus einem Messsignal umfasst eine Auswerteeinrichtung. Die Auswerteeinrichtung ist dazu ausgebildet, einen Grenzwert eines innerhalb des Gesamtbereichs liegenden Teilbereichs von zu einem vorgegebenen Zeitpunkt möglichen Positionen des beweglichen Elements unter Berücksichtigung einer eine Anfangsposition bildenden ersten Position des beweglichen Elements und einer vorgegebenen Randbedingung für eine Bewegung des beweglichen Elements zu bestimmen. Die Auswerteeinrichtung ist dazu ausgebildet ist, das Messsignal einzulesen. Die Auswerteeinrichtung ist dazu ausgebildet, eine zweite Position des beweglichen Elements als eine Endposition aus dem Messsignal unter Berücksichtigung lediglich des Teilbereichs der zu dem vorgegebenen Zeitpunkt möglichen Positionen zu bestimmen.

Insbesondere wenn der Teilbereich kleiner ist als der Gesamtbereich, müssen durch die Auswerteeinrichtung bei der Bestimmung der zweiten Position weniger mögliche Positionen berücksichtigt werden als bei einer Berücksichtigung des vollständigen Gesamtbereichs. Dadurch kann die Auswerteeinrichtung die zweite Position bei vorgegebener Genauigkeit der Positionsbestimmung schneller und effizienter, insbesondere energieeffizienter, bestimmen oder aber bei vorgegebener Geschwindigkeit der Positionsbestimmung die zweite Position genauer bestimmen.

Bei einer Weiterbildung des Systems zur Positionsbestimmung ist die Auswerteeinrichtung dazu ausgebildet, das Bestimmen des Grenzwerts, das Einlesen des Messsignals und das Bestimmen der zweiten Position zyklisch zu wiederholen und die in einem vergangenen Zyklus bestimmte Endposition in einem dem vergangenen Zyklus nachfolgenden aktuellen Zyklus als die erste Position zu berücksichtigen. Die Auswerteeinrichtung kann dadurch den Teilbereich der zu dem vorgegebenen Zeitpunkt möglichen Positionen iterativ aus den in den vergangenen Zyklen bestimmten Endpositionen bestimmen.

Bei einer Weiterbildung des Systems zur Positionsbestimmung umfasst das System einen mit der Auswerteeinrichtung verbundenen Speicherbaustein. Der Speicherbaustein ist dazu ausgebildet, eine Datenstruktur zu speichern, deren Datenelemente Positionen des beweglichen Elements innerhalb des Gesamtbereichs repräsentieren. Die Auswerteeinrichtung ist dazu ausgebildet, eine Teilmenge der Datenelemente der Datenstruktur aus dem Speicherbaustein zu laden, so dass die geladenen Datenelemente der Teilmenge nur Positionen innerhalb des Teilbereichs der zu dem vorgegebenen Zeitpunkt möglichen Positionen repräsentieren und die Teilmenge weniger Datenelemente umfasst als die gesamte Datenstruktur. Der Grenzwert des Teilbereichs definiert ein Datenelement der Teilmenge der Datenelemente der Datenstruktur. Die Auswerteeinrichtung ist dazu ausgebildet, die zweite Position des beweglichen Elements unter Berücksichtigung lediglich der Teilmenge der Datenelemente der Datenstruktur zu bestimmen und die Teilmenge der Datenelemente der Datenstruktur aus dem Speicherbaustein vor dem Bestimmen der zweiten Position zu laden.

Ein Maschinensystem weist eine Maschine mit einem innerhalb eines Gesamtbereichs beweglichen Element und ein System zur Positionsbestimmung des beweglichen Elements aus einem Messsignal auf. Das System zur Positionsbestimmung umfasst eine Auswerteeinrichtung. Die Auswerteeinrichtung ist dazu ausgebildet, einen Grenzwert eines innerhalb des Gesamtbereichs liegenden Teilbereichs von zu einem vorgegebenen Zeitpunkt möglichen Positionen des beweglichen Elements unter Berücksichtigung einer eine Anfangsposition bildenden ersten Position des beweglichen Elements und einer vorgegebenen Randbedingung für eine Bewegung des beweglichen Elements zu bestimmen. Die Auswerteeinrichtung ist dazu ausgebildet, das Messsignal einzulesen. Die Auswerteeinrichtung ist dazu ausgebildet, eine zweite Position des beweglichen Elements als eine Endposition aus dem Messsignal unter Berücksichtigung lediglich des Teilbereichs der zu dem vorgegebenen Zeitpunkt möglichen Positionen zu bestimmen.

Bei einer Weiterbildung des Maschinensystems ist die Auswerteeinrichtung dazu ausgebildet, das Bestimmen des Grenzwerts, das Einlesen des Messsignals und das Bestimmen der zweiten Position zyklisch zu wiederholen und die in einem vergangenen Zyklus bestimmte Endposition in einem dem vergangenen Zyklus nachfolgenden aktuellen Zyklus als die erste Position zu berücksichtigen. Die Auswerteeinrichtung kann dadurch den Teilbereich der zu dem vorgegebenen Zeitpunkt möglichen Positionen iterativ aus den in den vergangenen Zyklen bestimmten Endpositionen bestimmen.

Bei einer Weiterbildung des Maschinensystems ist das Maschinensystem ein Antrieb und die Maschine ein Elektromotor. Durch die Verwendung einer Auswerteeinrichtung, die die zweite Position lediglich unter Berücksichtigung des Teilbereichs möglicher Position bestimmt, in einem Antrieb mit einem Elektromotor wird eine besonders schnelle und präzise Steuerung oder Regelung des elektrischen Motors des Antriebs ermöglicht.

Die Erfindung wird nachfolgend anhand von Ausführungsbeispielen und unter Bezugnahme auf Figuren näher erläutert. Dabei zeigen jeweils in schematischer Darstellung

Fig. 1    ein Maschinensystem mit einer Maschine mit einem innerhalb eines Gesamtbereichs beweglichen Element und mit einem System zur Positionsbestimmung des beweglichen Elements,

Fig. 2    ein Verfahren zur Positionsbestimmung des beweglichen Elements,

Fig. 3    ein Bestimmen einer Position des beweglichen Elements unter Berücksichtigung einer festgelegten Geschwindigkeit des beweglichen Elements,

Fig. 4    ein weiteres Bestimmen der Position des beweglichen Elements unter Berücksichtigung einer festgelegten Geschwindigkeit des beweglichen Elements,

Fig. 5    ein Bestimmen einer Position des beweglichen Elements unter Berücksichtigung einer festgelegten Beschleunigung des beweglichen Elements,

Fig. 6    ein Bestimmen einer Position eines rotatorisch beweglichen Elements unter Berücksichtigung einer festgelegten Beschleunigung,

Fig. 7    eine weitere Ausführungsform des Verfahrens zur Positionsbestimmung des beweglichen Elements und

Fig. 8    eine weitere Ausführungsform des Maschinensystems mit einem einen Speicherbaustein umfassenden System zur Positionsbestimmung.

Bei Systemen zur Bestimmung einer Position eines beweglichen Elements einer Maschine aus Messsignalen werden die Messsignale in der Regel periodisch in bestimmten Zeitintervallen erfasst. Die Zeitintervalle werden typischerweise durch die Sampling- oder Abtastzeit eines Systems zur Erzeugung der Messsignale festgelegt. Aus den erfassten Messsignalen wird anschließend eine Position des beweglichen Elements bestimmt bzw. errechnet.

In der Regel wird bei der Bestimmung der Position des beweglichen Elements aus dem erfassten Messsignal angenommen, dass sich das bewegliche Element an einer beliebigen Position innerhalb eines Gesamtbereichs, über den sich das Element bewegen kann, aufhalten kann. Eine Berücksichtigung des vollständigen Gesamtbereichs bei der Verarbeitung des Messsignals erfordert einen hohen Rechenaufwand für die Positionsbestimmung. Dies ist insbesondere relevant bei einer Positionsbestimmung mittels eines Vergleichs des Messsignals mit hinterlegten Messsignalen bekannter Positionen, wie er bei Ähnlichkeits- oder Korrelationsverfahren vorgenommen wird. Eine Berücksichtigung des vollständigen Gesamtbereichs bedeutet dann, dass das Messsignal auch mit allen für den Gesamtbereich hinterlegten Messsignalen verglichen werden muss.

Dagegen wurde im Rahmen der vorliegenden Erfindung erkannt, dass sich das bewegliche Element der Maschine in einem vorgegebenen Zeitintervall in der Regel gar nicht über den Gesamtbereich möglicher Positionen bewegen kann. Vielmehr existieren eine oder mehrere Randbedingungen an die Bewegung des beweglichen Elements der Maschine. Die Randbedingungen definieren, ausgehend von einer bekannten Position des beweglichen Elements zu einem vorangegangen Zeitpunkt, einen Teilbereich innerhalb des Gesamtbereichs, der alle zu einem späteren Zeitpunkt möglichen Positionen des beweglichen Elements umfasst. Die Randbedingungen können also insbesondere festlegen, wie weit sich das bewegliche Element von der bekannten Position des vorangegangenen Zeitpunkts bis zu dem vorgegebenen Zeitpunkt, beispielsweise bis zum Zeitpunkt einer erneuten Positionsbestimmung, höchstens entfernt haben kann bzw. mindestens entfernt haben muss.

Der Erfindung liegt allgemein die Idee zu Grunde, vor der Bestimmung einer Position eines beweglichen Elements einer Maschine einen Teilbereich möglicher Positionen bzw. ein Positionsfenster zu bestimmen, in dem die zu bestimmende Position liegen kann. Dadurch muss die zu bestimmende Position des beweglichen Elements nicht mehr in einem Gesamtbereich, über den das bewegliche Element insgesamt bewegbar ist, bestimmt werden, sondern nur noch innerhalb des Teilbereichs. Dies schränkt insbesondere dann, wenn die Position mittels eines Vergleichs eines Messsignals mit hinterlegten Messsignalen bekannter Positionen bestimmt wird, die Anzahl der für den Vergleich heranzuziehenden Messsignale ein, was eine schnellere und effizientere Positionsbestimmung ermöglicht.

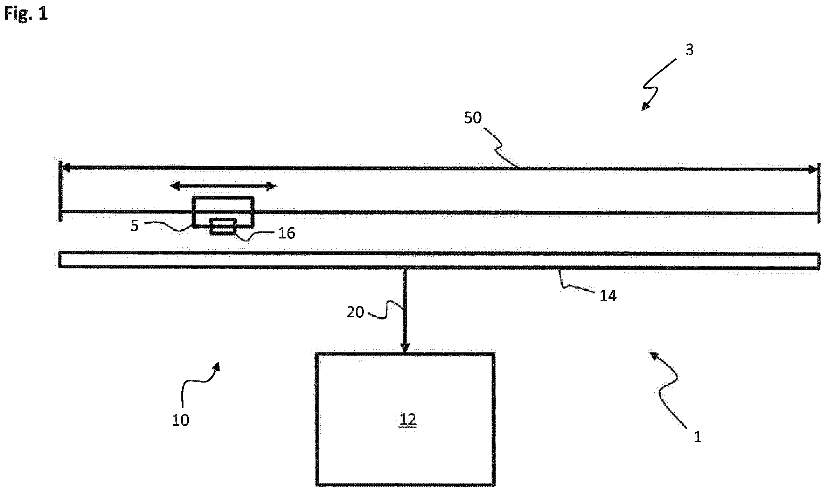

In Figur 1 ist ein Maschinensystem 1 dargestellt, welches eine Maschine 3 mit einem beweglichen Element 5 und ein System 10 zur Positionsbestimmung des beweglichen Elements 5 umfasst. Das bewegliche Element 5 der Maschine 3 ist dazu ausgebildet, innerhalb eines Gesamtbereichs 50 beweglich zu sein, kann also Positionen innerhalb des Gesamtbereichs 50 einnehmen. Beispielsweise kann das bewegliche Element 5 über den Gesamtbereich kontinuierlich oder diskret beweglich bzw. verfahrbar sein.

Bei der in Figur 1 dargestellten Maschine 3 ist das bewegliche Element 5 innerhalb des Gesamtbereichs 50 linear beweglich. Eine Position des beweglichen Elements 5 innerhalb des Gesamtbereichs 50 kann durch einen Abstand von einem ausgezeichneten Punkt innerhalb des Gesamtbereichs 50 definiert werden. Bei der Maschine 3 kann es sich um einen elektrischen Motor handeln, insbesondere kann es sich um einen elektrischen Linearmotor mit einem Läufer oder Schlitten als beweglichem Element 5 handeln.

Bei alternativen Ausführungsformen der Maschine 3 kann das bewegliche Element 5 auch innerhalb des Gesamtbereichs 50 rotatorisch beweglich sein. Eine Position des beweglichen Elements 5 innerhalb des Gesamtbereichs 50 kann durch einen Winkel, der die Stellung des beweglichen Elements 5 beschreibt, angegeben werden. Bei der alternativen Ausführungsform der Maschine 3 kann es sich um einen elektrischen Motor handeln mit einem Rotor oder einer mit dem Rotor verbundenen Welle als beweglichem Element 5.

Das System 10 zur Positionsbestimmung des beweglichen Elements 5 umfasst eine Signalerfassungseinrichtung 14 und eine mit der Signalerfassungseinrichtung 14 über eine Signalleitung verbundene Auswerteeinrichtung 12. Die Signalerfassungseinrichtung 14 ist dazu ausgebildet, die Position des beweglichen Elements 5 zu erfassen und ein die erfasste Position repräsentierendes Messsignal 20 zu erzeugen. Außerdem ist die Signalerfassungseinrichtung 14 dazu ausgebildet, das Messsignal 20 über die Datenleitung an die Auswerteeinrichtung 12 zu übermitteln.

Zur Erfassung der Position des beweglichen Elements 5 und zur Erzeugung des Messsignals 20 kann die Signalerfassungseinrichtung 14, wie es in Figur 1 dargestellt ist, dazu ausgebildet sein, mit einer Gebereinheit 16 zusammenzuwirken. Die Gebereinheit 16 stellt einen Positionsgeber dar. Die Signalerfassungseinrichtung 14 und die Gebereinheit 16 können unter anderem induktiv zusammenwirken. Dabei kann die Gebereinheit 16 ein ein Magnetfeld erzeugendes Element umfassen und das Messsignal 20 kann die durch das Magnetfeld in der Signalerfassungseinrichtung 14 induzierte Spannung repräsentieren. Die Signalerfassungseinrichtung 14 und die Gebereinheit 16 können aber auch optisch zusammenwirken und das Messsignal 20 kann ein von einer Lichtquelle in einem lichtempfindlichen Detektor der Signalerfassungseinrichtung 14 erzeugtes Signal repräsentieren. Die Signalerfassungseinrichtung 14 und die Gebereinheit 16 können auch mechanisch, magnetisch oder auch kapazitiv zusammenwirken.

Bei dem in Figur 1 dargestellten Ausführungsbeispiel ist die Gebereinheit 16 an dem beweglichen Element 5 und Signalerfassungseinheit 14 ortsfest entlang des Gesamtbereichs 50 angeordnet. Es kann aber auch die Gebereinheit 16 ortsfest entlang des Gesamtbereichs 50 und die Signalerfassungseinheit 14 an dem beweglichen Element 5 angeordnet sein.

Das Messsignal 20, welches die Position des beweglichen Elements 5 repräsentiert, kann einen einzelnen Messwert oder mehrere Messwerte umfassen. Beispielsweise kann die Signalerfassungseinrichtung 14 mehrere über den Gesamtbereich 50 verteilte Sensoren umfassen, welche jeweils einen Messwert erfassen, beispielsweise eine in dem jeweiligen Sensor induzierte Spannung. In solch einem Fall kann das Messsignal 20 alle in den Sensoren erfassten Messwerte umfassen. Das Messsignal 20 kann beispielsweise als ein Vektor von Messwerten dargestellt werden. Das Messsignal 20 kann ein analoges oder ein digitales Messsignal sein. Bei einem digitalen Messsignal kann die Signalerfassungseinrichtung 14 analoge Messwerte mittels eines Analog-Digital-Wandlers digitalisieren. Alternativ kann das Messsignal 20 auch als ein analoges Messsignal zu der Auswerteeinrichtung 12 übertragen werden und dort in ein digitales Messsignal umgewandelt werden.

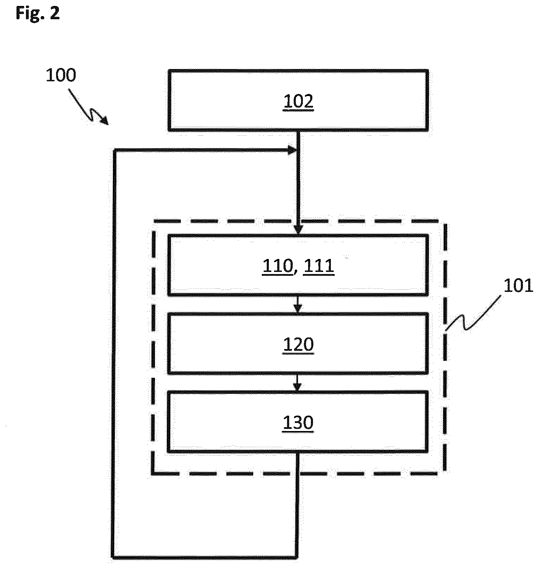

Die Auswerteeinrichtung 12 ist dazu ausgebildet, das Messsignal 20 einzulesen und aus dem Messsignal 20 eine Position des beweglichen Elements 5 zu bestimmen. Dabei führt die Auswerteeinrichtung 12 ein Verfahren 100 zur Positionsbestimmung aus, welches schematisch in Figur 2 dargestellt ist. Das Verfahren 100 umfasst einen Zyklus 101 mit mehreren Schritten, welche zyklisch wiederholt werden. Beispielsweise können die Schritte des Zyklus 101 immer dann wiederholt werden, wenn die Signalerfassungseinrichtung 14 ein neues Messsignal 20 erzeugt hat. Der Zyklus 101 kann insbesondere mit einer Updaterate des Systems 10 zur Positionsbestimmung wiederholt werden. Das Zeitintervall, mit dem der Zyklus 101 wiederholt wird, kann auch einer Samplingzeit der Positionserfassung entsprechen.

Zu Beginn eines im Weiteren als ein aktueller Zyklus bezeichneten Zyklus 101 liegt bereits eine erste Position des beweglichen Elements 5 innerhalb des Gesamtbereichs 50 als eine Anfangsposition vor, welche in einem dem aktuellen Zyklus vorausgegangenen vergangenen Zyklus bestimmt worden ist. Beispielsweise kann es sich bei dem vergangenen Zyklus um den dem aktuellen Zyklus unmittelbar vorausgegangenen Zyklus handeln, also den letzten Zyklus.

Ausgehend von der in dem vergangenen Zyklus bestimmten ersten Position des beweglichen Elements 5 wird innerhalb des Gesamtbereichs 50 möglicher Positionen des beweglichen Elements 5 ein Teilbereich bestimmt, in welchem die zu einem vorgegebenen Zeitpunkt möglichen Positionen des beweglichen Elements 5 liegen können. Hierzu erfolgt zunächst ein Bestimmen 110 mindestens eines ersten Grenzwerts des Teilbereichs. Nach einem Einlesen 120 des Messsignals 120 erfolgt ein Bestimmen 130 einer zweiten Position des beweglichen Elements 5 als einer Endposition aus dem Messsignal 120 unter Berücksichtigung lediglich des Teilbereichs der zu dem vorgegebenen Zeitpunkt möglichen Positionen des beweglichen Elements 5.

Der vorgegebene Zeitpunkt kann beispielsweise der Zeitpunkt der Erfassung des Messsignals 20 durch die Signalerfassungseinrichtung 14 sein. Die zweite Position kann als diejenige Position bestimmt werden, an der sich das bewegliche Element 5 beim Erfassen des Messsignals 20 befunden hat. Der vorgegebene Zeitpunkt kann aber auch der Zeitpunkt des Einlesens 120 des Messsignals 20 oder des Bestimmens 130 der zweiten Position sein. Die Zeitdauer zwischen den vorgegebenen Zeitpunkten des vergangenen Zyklus und des aktuellen Zyklus kann insbesondere durch eine Sampling-, Signalerfassungs- bzw. Abtastzeit des Systems 10 zur Positionsbestimmung gegeben sein.

Die vorgegebene Randbedingung der Bewegung des bewegten Elements 5 kann insbesondere die Bewegungen, die das bewegliche Element 5 zwischen dem vorgegebenen Zeitpunkt des vergangenen Zyklus und dem vorgegebenen Zeitpunkt des nachfolgenden aktuellen Zyklus ausführen kann, und damit mögliche Änderungen der Position des beweglichen Elements zwischen den beiden vorgegebenen Zeitpunkten begrenzen oder einschränken.

Die Randbedingung kann für alle Zyklen 101 fest vorgegeben sein, etwa als extremale Randbedingung an die Bewegung, sie kann aber auch während der Bewegung des beweglichen Elements 5 jeweils dynamisch für jeden einzelnen Zyklus 101 oder für mehrere Zyklen 101 neu vorgegeben werden. Die Randbedingung kann dadurch vorgegeben sein, dass die Maschine 3 innerhalb vorgegebener Parameter betrieben, gesteuert oder geregelt wird. Die Randbedingung kann auch durch einen Betriebsmodus der Maschine 3 vorgegeben sein, etwa durch einen Normalbetrieb oder einen Sicherheitsbetrieb. Sie kann beispielsweise vorgegeben sein durch einen Betriebsmodus, in dem eine maximale bzw. minimale Position, eine maximale bzw. minimale Geschwindigkeit oder eine maximale bzw. minimale Beschleunigung vorgegeben oder eingehalten wird. Die Randbedingung kann auch basierend auf in vorangegangenen Zyklen 101 bestimmten zweiten Positionen vorgegeben werden. Die Randbedingung kann insbesondere linearisiert aus in vorangegangenen Zyklen 101 bestimmten zweiten Positionen als eine Geschwindigkeit des beweglichen Elements 5 bestimmt werden.

Die Randbedingung an die Bewegung des beweglichen Elements 5 kann auch durch einen Maschinenzustand der Maschine 3 vorgegeben sein. Insbesondere kann die Randbedingung durch einen gemessenen Maschinenzustand vorgegeben sein.

Die Randbedingung für die Bewegung des beweglichen Elements 5 kann insbesondere eine vorgegebene kinematische Zustandsgröße der Bewegung des beweglichen Elements 5 sein. Insbesondere kann es sich um eine vorgegebene extremale kinematische Zustandsgröße handeln. Die kinematische Zustandsgröße kann bei dem Bestimmen 110 des Grenzwerts des Teilbereichs berücksichtigt werden, indem sie als Variable in die Newtonsche Bewegungsgleichung für das bewegliche Element 5 eingesetzt wird. Bei der Randbedingung für die Bewegung des beweglichen Elements 5 kann es sich insbesondere um eine zeitliche Ableitung der Position des beweglichen Elements 5 handeln, etwa um eine Geschwindigkeit, eine Beschleunigung oder einen Ruck (zeitliche Ableitung der Beschleunigung) des beweglichen Elements 5.

Der vorgegebene Zeitpunkt, für den der Teilbereich bestimmt wird, wird derart gewählt, dass lediglich der Teilbereich bei dem Bestimmen 130 der zweiten Position berücksichtigt werden kann. Insbesondere kann der vorgegebene Zeitpunkt derart gewählt werden, dass die als Endposition zu bestimmende zweite Position innerhalb des Teilbereichs liegt. Der Teilbereich kann insbesondere angeben, wie weit sich das bewegliche Element 5 von der beim Bestimmen 110 des Grenzwerts des Teilbereichs berücksichtigten Anfangsposition höchstens entfernt haben kann und/oder mindestens entfernt haben muss.

Die in dem aktuellen Zyklus 101 bestimmte zweite Position kann in einem auf den aktuellen Zyklus 101 nachfolgenden, beispielsweise in einem auf den aktuellen Zyklus 101 direkt nachfolgenden, nächsten Zyklus 101 wieder als Anfangsposition berücksichtigt werden. Dies kann analog zu dem Berücksichtigen der in dem vergangenen Zyklus 101 bestimmten Endposition als Anfangsposition bzw. erster Position in dem aktuellen Zyklus 101 erfolgen. Insgesamt kann also bei dem Verfahren 100 iterativ die in einem der Zyklen 101 bestimmte Endposition in einem auf den betreffenden Zyklus 101 nachfolgenden, beispielsweise unmittelbar nachfolgenden Zyklus 101, als Anfangsposition berücksichtigt werden. Ausgehend von dieser Anfangsposition kann dann in dem nachfolgenden Zyklus 101 der Teilbereich möglicher Positionen des beweglichen Elements 5 bestimmt werden. Um die Endposition in dem nachfolgenden Zyklus 101 berücksichtigen zu können, kann die Endpositionen nach ihrem Bestimmen 130 in einem Speicherelement der Auswerteeinrichtung 12 hinterlegt werden.

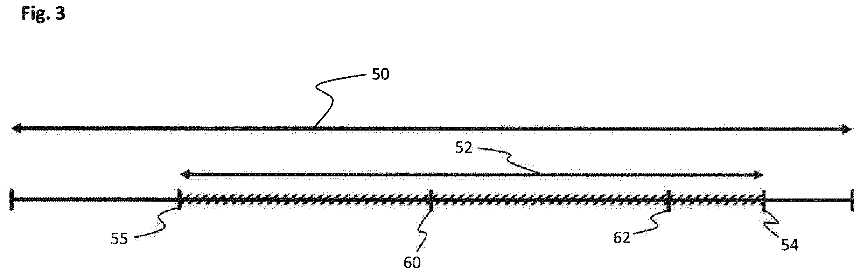

Figur 3 illustriert eine Ausführungsform des Verfahrens 100 zur Positionsbestimmung, bei dem das Bestimmen 110 des ersten Grenzwerts 54 des Teilbereichs 52 unter Berücksichtigung einer vorgegebenen ersten Geschwindigkeit $v_1$ des beweglichen Elements 5 als vorgegebener Randbedingung erfolgt. Bei der vorgegebenen ersten Geschwindigkeit $v_1$ handelt es sich um eine vorgegebene maximale Geschwindigkeit des beweglichen Elements 5.

Der erste Grenzwert 54 wird ausgehend von der die Anfangsposition darstellenden und in dem vergangenen Zyklus ermittelten ersten Position 60 bestimmt. Dabei wird angenommen, dass sich das bewegliche Element 5 während einer Zeitdauer $\Delta t$ zwischen dem vorgegebenen Zeitpunkt, für den die erste Position 60 bestimmt worden ist, und dem vorgegebenen Zeitpunkt, für den der erste Grenzwert 54 bestimmt wird, konstant mit der vorgegebenen ersten Geschwindigkeit $v_1$ bewegt hat. Folglich errechnet sich der Abstand des ersten Grenzwerts 54 von der ersten Position 60 durch $v_1 \cdot \Delta t$. Dieser Abstand beschreibt die maximale Entfernung, die das bewegliche Element 5 zu dem vorgegebenen Zeitpunkt von der bereits als Anfangsposition bekannten ersten Position 60 aufweisen kann.

Neben dem Bestimmen 110 des ersten Grenzwerts 54 kann das Verfahren 100 ein Bestimmen 111 eines zweiten Grenzwerts 55 des Teilbereichs 52 als einen weiteren Grenzwert umfassen. Der zweite bzw. weitere Grenzwert 55 kann beispielsweise unter Berücksichtigung einer vorgegebenen zweiten Geschwindigkeit $v_2$ bestimmt werden, wobei das Bestimmen des zweiten Grenzwerts 55 aus der zweiten Geschwindigkeit $v_2$ mit $v_2 \cdot \Delta t$ erfolgt wie das Bestimmen 110 des ersten Grenzwerts. Die vorgegebene zweite Geschwindigkeit $v_2$ kann beispielsweise eine minimale Geschwindigkeit des beweglichen Elements 5 sein. Bei dem in Figur 3 dargestellten Verfahren 100 beschreibt die minimale Geschwindigkeit $v_2$ eine Bewegung in einer der Bewegung mit der maximalen Geschwindigkeit $v_1$ entgegengesetzten Richtung. Bei anderen Ausführungsformen des Verfahrens 100, insbesondere bei Anwendungen mit rotatorisch beweglichem Element 5, können die vorgegebene erste und zweite Geschwindigkeit $v_1$, $v_2$ aber auch Bewegungen in gleicher Richtung, aber mit unterschiedlichem Geschwindigkeitsbetrag beschreiben.

Der durch den Abstand $v_2 \cdot \Delta t$ gegebene zweite Grenzwert 55 kann insbesondere die Entfernung beschreiben, die das bewegliche Element 5 zu dem vorgegebenen Zeitpunkt von der ersten Position 60 in einer der Richtung des ersten Grenzwerts 54 entgegengesetzten Richtung höchstens aufweisen kann bzw. in der Richtung des ersten Grenzwerts 54 mindestens aufweisen muss.

Der erste Grenzwert 54 definiert innerhalb des Gesamtbereichs 50 eine Grenze zwischen den in dem Teilbereich 52 liegenden Positionen des beweglichen Elements 5 und den außerhalb des Teilbereichs 52 liegenden Positionen. Ebenso definiert der zweite Grenzwert 56 innerhalb des Gesamtbereichs 50 eine Grenze zwischen den in dem Teilbereich 52 liegenden Positionen des beweglichen Elements 5 und den außerhalb des Teilbereichs 52 liegenden Positionen. Der Teilbereich 52 erstreckt sich zwischen dem ersten Grenzwert 54 und dem zweiten Grenzwert 55.

Bei Ausführungsformen des Verfahrens 100, die das Bestimmen des zweiten Grenzwerts 55 nicht umfassen und bei denen sich das bewegliche Element 5 beispielsweise nur in eine Richtung bewegen kann, kann auch die erste Position 60 als ein Grenzwert des Teilbereichs 52 verwendet werden. Dann erstreckt sich der Teilbereich 52 zwischen der ersten Position 60 und dem ersten Grenzwert 54.

Die Grenzwerte 54, 55 werden bei dem in Figur 3 dargestellten Verfahren 100 derart bestimmt, dass die zu bestimmende zweite Position 62 innerhalb des Teilbereichs 52 der zu dem vorgegebenen Zeitpunkt möglichen Positionen des beweglichen Elements 5 liegt. Damit müssen bei dem Bestimmen 130 der zweiten Position 62 nur noch Positionen des beweglichen Elements 5 berücksichtigt werden, die innerhalb des Teilbereichs 52 liegen. Das Bestimmen 130 der zweiten Position 62 erfolgt also nicht in dem Gesamtbereich 50, sondern in dem Teilbereich 52.

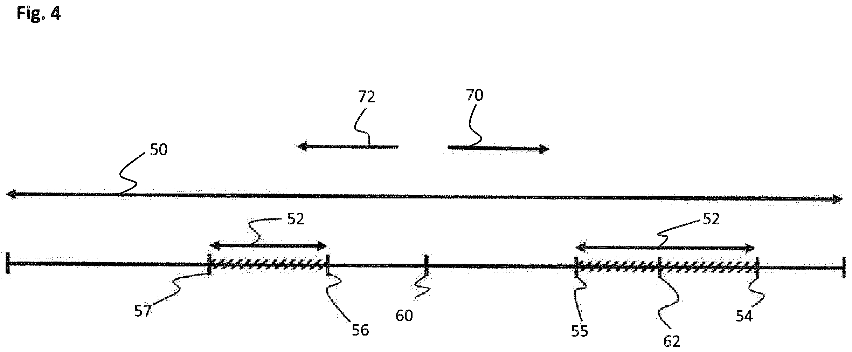

In Figur 4 ist eine Ausführungsform des Verfahrens 100 zur Positionsbestimmung dargestellt, bei der neben der vorgegebenen ersten und zweiten Geschwindigkeit $v_1$, $v_2$ noch eine vorgegebene dritte Geschwindigkeit $v_3$ und eine vorgegebene vierte Geschwindigkeit $v_4$ als eine Randbedingung berücksichtigt werden. Aus der ersten Geschwindigkeit $v_1$ und der zweite Geschwindigkeit $v_2$ werden, wie im Zusammenhang mit Figur 3 beschrieben wurde, der erste Grenzwert 54 und der zweite Grenzwert 55 bestimmt. Bei der in Figur 4 dargestellten Ausführungsform des Verfahrens 100 beschreiben die erste und die zweite Geschwindigkeit $v_1$, $v_2$ jeweils Bewegungen des beweglichen Elements 5 in eine erste Richtung 70, wobei die erste Geschwindigkeit $v_1$ eine Bewegung mit maximalem Geschwindigkeitsbetrag in die erste Richtung 70 und die zweite Geschwindigkeit $v_2$ eine Bewegung mit minimalem Geschwindigkeitsbetrag in die erste Richtung 70 beschreiben.

Die dritte Geschwindigkeit $v_3$ und die vierte Geschwindigkeit $v_4$ beschreiben jeweils Bewegungen des beweglichen Elements 5 in eine der ersten Richtung 70 entgegengesetzten zweiten Richtung 72. Die dritte Geschwindigkeit $v_3$ beschreibt dabei eine Bewegung mit minimalem Geschwindigkeitsbetrag in die zweite Richtung 72, die vierte Geschwindigkeit $v_4$ beschreibt eine Bewegung mit maximalem Geschwindigkeitsbetrag in die zweite Richtung 72. Unter Annahme einer Bewegung mit konstanter Geschwindigkeit $v_3$ bzw. $v_4$ während der Zeitdauer $\Delta t$ berechnet sich ausgehend von der ersten Position 60 der Abstand zu einem dritten Grenzwert 56 des Teilbereichs 52 aus $v_3 * \Delta t$ und der Abstand zu einem vierten Grenzwert 57 des Teilbereichs 52 aus $v_4 * \Delta t$. Der in Figur 4 dargestellte Teilbereich 52 besteht aus zwei voneinander getrennten, in sich zusammenhängenden Unterbereichen, wobei sich ein erster Unterbereich des Teilbereichs 52 zwischen dem ersten Grenzwert 54 und dem zweiten Grenzwert 55 erstreckt und ein zweiter Unterbereich des Teilbereichs 52 zwischen dem dritten Grenzwert 56 und dem vierten Grenzwert 57.

Bei dem Bestimmen 130 der zweiten Position 62 kann davon ausgegangen werden, dass sich das bewegliche Element 5 innerhalb des Teilbereichs 52, also entweder innerhalb des ersten oder des zweiten Unterbereichs, befindet. Bei dem Bestimmen 130 der zweiten Position 62 werden nur Positionen innerhalb des Teilbereichs 52 berücksichtigt.

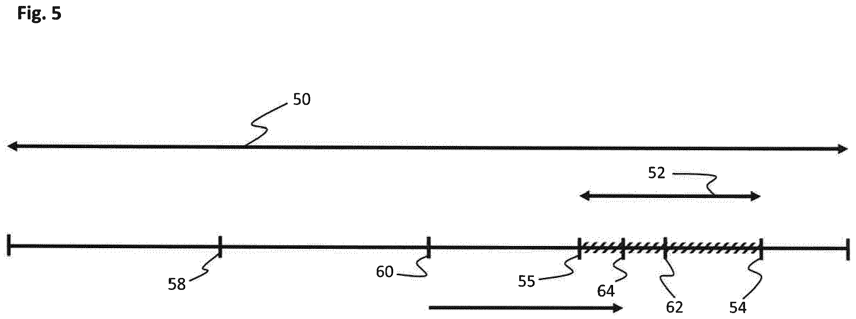

In Figur 5 ist eine Ausführungsform des Verfahrens 100 zur Positionsbestimmung dargestellt, bei der eine für den aktuellen Zyklus 101 vorgegebene Beschleunigung $a_1$ des beweglichen Elements 5 als vorgegebene Randbedingung berücksichtigt wird.

Die vorgegebene Beschleunigung $a_1$ kann beispielsweise durch die mechanischen Randbedingungen der Maschine 3 gegeben sein. Die vorgegebene Beschleunigung $a_1$ kann beispielsweise durch eine Massenträgheit des beweglichen Elements 5 und/oder eine Antriebskraft eines das bewegliche Element 5 antreibenden Antriebs gegeben sein. Die vorgegebene Beschleunigung $a_1$ kann beispielsweise, wie in Figur 5 dargestellt, eine maximale Beschleunigung des beweglichen Elements 5 sein. Die vorgegebene Beschleunigung $a_1$ kann beispielsweise statisch für alle Zyklen 101 vorgegeben sein. Die vorgegebene Beschleunigung $a_1$ kann auch während der Bewegung des beweglichen Elements 5 dynamisch für jeden Zyklus 101 oder für mehrere Zyklen 101 neu vorgegeben werden. Beispielsweise kann die vorgegebene Beschleunigung $a_1$ bei einem Steuern oder Regeln der Position des beweglichen Elements 5 vorgegeben sein, beispielsweise als eine extremale Beschleunigung. Bei der vorgegebenen Beschleunigung $a_1$ des in Figur 5 dargestellten Ausführungsbeispiels handelt es sich um eine maximale Beschleunigung des beweglichen Elements 5 im aktuellen Zyklus 101.

Die vorgegebene Beschleunigung $a_1$ kann aber auch durch einen Maschinenzustand der Maschine vorgegeben sein. Insbesondere kann die vorgegebene Beschleunigung durch einen gemessenen Maschinenzustand der Maschine vorgegeben sein.

Zusätzlich zu der vorgegebenen Beschleunigung $a_1$ werden bei der in Figur 5 dargestellten Ausführungsform des Verfahrens 100 die erste Position 60 und eine gemessene Geschwindigkeit des beweglichen Elements 5 bei dem Bestimmen 110 des Grenzwerts 54 berücksichtigt. Mittels der gemessenen Geschwindigkeit kann eine geschätzte Position 64 des beweglichen Elements 5 ermittelt werden. Die geschätzte Position 64 ist diejenige Position, an der sich das bewegliche Element 5 ausgehend von der ersten Position 60 zu dem vorgegebenen Zeitpunkt befinden würde, wenn sich das bewegliche Element 5 unbeschleunigt mit der gemessenen Geschwindigkeit bewegen würde.

Die gemessene Geschwindigkeit kann durch einen Maschinenzustand der Maschine 3 vorgegeben sein, beispielsweise durch einen gemessenen Maschinenzustand, etwa durch einen Spulenstrom, eine Magnetfeld oder einen magnetischen Fluss einer Antriebsspule der Maschine 3.

Die gemessene Geschwindigkeit kann als Maschinenzustand bei dem Bestimmen 110 des Grenzwerts 54 aber auch dadurch berücksichtigt werden, dass zusätzlich zur Berücksichtigung der vorgegebenen Beschleunigung $a_1$ und der ersten Position 60 eine frühere Position 58 des beweglichen Elements 5, eine erste Zeitdauer $\Delta t_1$ und eine zweite Zeitdauer $\Delta t_2$ berücksichtigt

werden, wie es bei der in Figur 5 dargestellten Ausführungsform des Verfahrens 100 gezeigt ist.

Die frühere Position 58 wurde in einem dem vergangenen Zyklus 101 vorangegangenen vorvergangenen Zyklus 101 als die Endposition bestimmt. Bei dem vorvergangenen Zyklus 101 kann es sich um den dem vergangenen Zyklus 101 unmittelbar vorangegangenen Zyklus 101 handeln, also ausgehend von dem aktuellen Zyklus 101 um den vorletzten Zyklus 101. Handelt es sich bei dem vergangenen Zyklus 101 und dem vorvergangenen Zyklus 101 um direkt aufeinanderfolgende Zyklen 101, so wurde die frühere Position 58 in dem vergangenen Zyklus 101 auch als die Anfangsposition verwendet.

Die erste Zeitdauer $\Delta t_1$ gibt diejenige Zeitdauer an, welche zwischen dem vorgegebenen Zeitpunkt des vorvergangenen Zyklus 101 und dem vorgegebenen Zeitpunkt des vergangenen Zyklus 101 liegt. Beispielsweise kann die erste Zeitdauer $\Delta t_1$ die Zeit zwischen dem Erfassen des Messsignals 20 zur Bestimmung der früheren Position 58 und dem Erfassen des Messsignals 20 zur Bestimmung der ersten Position 60 bezeichnen.

Die zweite Zeitdauer $\Delta t_2$ gibt die Zeit zwischen dem vorgegebenen Zeitpunkt des vergangenen Zyklus 101 und dem vorgegebenen Zeitpunkt des aktuellen Zyklus 101 an. Beispielsweise kann die zweite Zeitdauer $\Delta t_2$ die Zeit zwischen dem Erfassen des Messsignals 20 zur Bestimmung der ersten Position 60 und dem Erfassen des Messsignals 20 zum Bestimmen 130 der zweiten Position 62 bezeichnen.

Bei dem in Figur 5 dargestellten Bestimmen 110 des Grenzwerts 54 kann die gemessene Geschwindigkeit des beweglichen Elements 5 aus einer zeitlichen Ableitung vergangener Positionen des beweglichen Elements 5 bestimmt werden. Beispielsweise kann die gemessene Geschwindigkeit linearisiert unter Berücksichtigung der ersten Position 60, der früheren Position 58 und der ersten Zeitdauer $\Delta t_1$ bestimmt werden.

Im folgenden soll davon ausgegangen werden, dass es sich bei dem aktuellen Zyklus 101 um den (n+1)-ten Zyklus handelt.

Die in diesem (n+1)-ten Zyklus zu bestimmende zweite Position 62 wird daher im Folgenden auch mit $P_{n+1}$ bezeichnet. Bei dem vergangenen Zyklus 101 soll es sich um den n-ten Zyklus handeln. Die in dem n-ten Zyklus als Endposition bestimmte und im aktuellen (n+1)-ten Zyklus als erste Position 60 berücksichtigte Position wird mit $P_n$ bezeichnet. Bei dem vorvergangenen Zyklus 101 soll es sich um den (n-1)-ten Zyklus handeln. Die im (n-1)-ten Zyklus als Endposition bestimmte und im aktuellen (n+1)-ten Zyklus als frühere Position 58 berücksichtigte Position wird mit $P_{n-1}$ bezeichnet. Die gemessene Geschwindigkeit wird als $v_n$ bezeichnet und kann linearisiert bestimmt werden zu

$$v_n = \frac{P_n - P_{n-1}}{\Delta t_1} .$$

Mittels der gemessenen Geschwindigkeit $v_n$ des beweglichen Elements 5 kann ein Abstand zwischen der ersten Position 60 und einer geschätzten Position 64 des beweglichen Elements 5 zu dem für den aktuellen Zyklus vorgegebenen Zeitpunkt berechnet werden zu $v_n{}^*\Delta t_2$.

Mit dem Wissen um die aktuelle gemessene Geschwindigkeit $v_n$ und die vorgegebene Beschleunigung $a_1$ kann der erste Grenzwert 54 des Teilbereichs 52 der zu dem vorgegebenen Zeitpunkt des aktuellen Zyklus möglichen Positionen des beweglichen Elements 5 bestimmt werden, indem der Abstand des ersten Grenzwerts 54 von der geschätzten Position 64 errechnet wird zu

$$0,5 \cdot a_1 \cdot \Delta t_2{}^2 .$$

Dabei wird angenommen, dass die Beschleunigung des beweglichen Elements während der Zeitdauer $\Delta t_2$ konstant der vorgegebenen, beispielsweise maximalen, Beschleunigung $a_1$ entspricht.

Soll bei dem Bestimmen 110 des ersten Grenzwerts 54 auch eine mögliche Beschleunigung des beweglichen Elements 5 mit der Beschleunigung $a_1$ während der Zeitdauer $\Delta t_1$ berücksichtigt werden, so kann dies erfolgen, indem der Abstand des ersten Grenzwerts 54 von der geschätzten Position 64 vergrößert wird um

$$0,5 \cdot a_1 \cdot \Delta t_1{}^2 .$$

Insgesamt ergibt sich damit der Abstand des ersten Grenzwerts 54 von der ersten Position 60 als

$$\frac{P_n - P_{n-1}}{\Delta t_1} \cdot \Delta t_2 + 0,5 \cdot a_1 \cdot \Delta t_2{}^2 + 0,5 \cdot a_1 \cdot \Delta t_1{}^2 .$$

Zusätzlich kann die in Figur 5 dargestellte Ausführungsform des Verfahrens 100 das Bestimmen 111 des zweiten Grenzwerts 55 umfassen, wobei der zweite Grenzwert 55 unter Berücksichtigung einer weiteren vorgegebenen Beschleunigung $a_2$ erfolgt. Die weitere vorgegebene Beschleunigung $a_2$ kann auf die gleiche Weise vorgegeben sein wie die vorgegebene Beschleunigung $a_1$. Beispielsweise kann die weitere vorgegebene Beschleunigung $a_2$, wie es bei der in Figur 5 dargestellten Ausführungsform der Fall ist, eine minimale Beschleunigung bzw. maximale Verzögerung des beweglichen Elements 5 angeben. Wie bei dem ersten Grenzwert 54 wird bei dem Bestimmen 111 des zweiten Grenzwerts 55 der Abstand des zweiten Grenzwerts 55 von der ersten Position 60 ermittelt zu

$$\frac{P_n - P_{n-1}}{\Delta t_1} \cdot \Delta t_2 + 0,5 \cdot a_2 \cdot \Delta t_2{}^2 + 0,5 \cdot a_2 \cdot \Delta t_1{}^2 .$$

Bei dem Bestimmen 110 des ersten Grenzwerts 54 und bei dem Bestimmen 111 des zweiten Grenzwerts 55 kann für die erste Zeitdauer $\Delta t_1$ und die zweite Zeitdauer $\Delta t_2$ jeweils der gleiche Wert $\Delta t$ verwendet werden. Beispielsweise können die erste Zeitdauer $\Delta t_1$ und die zweite Zeitdauer $\Delta t_2$ gleich sein. Der Abstand von der ersten Position 60 berechnet sich dann jeweils für die geschätzte Position 64 zu

$$P_n - P_{n-1} \, ,$$

für den ersten Grenzwert 54 zu

$$P_n - P_{n-1} + a_1 \cdot \Delta t^2$$

und für den zweiten Grenzwert 55 zu

$$P_n - P_{n-1} + a_2 \cdot \Delta t^2 \, .$$

Zusätzlich zu der Berücksichtigung der früheren Position 58, der ersten Position 60, der ersten Zeitdauer $\Delta t_1$ und der zweiten Zeitdauer $\Delta t_2$ können bei dem Bestimmen 110 des ersten Grenzwerts 54 und/oder dem Bestimmen 111 des zweiten Grenzwerts 55 jeweils auch noch Sicherheitsabstände berücksichtigt werden, die möglichen Variationen der früheren Position 58, der ersten Position 60, der ersten Zeitdauer $\Delta t_1$, der zweiten Zeitdauer $\Delta t_2$ oder der vorgegebenen Randbedingung, insbesondere der Beschleunigungen $a_1$, $a_2$, insofern Rechnung tragen, dass der Abstand zwischen der ersten Position 60 und dem ersten Grenzwert 54 vergrößert und damit nach oben abgeschätzt und/oder der Abstand zwischen der ersten Position 60 und dem zweiten Grenzwert 55 verkleinert und damit nach unten abgeschätzt wird.

Das Bestimmen 110 des ersten Grenzwerts 54 unter Berücksichtigung der ersten Position 60, der früheren Position 58, der ersten Zeitdauer $\Delta t_1$, der zweiten Zeitdauer $\Delta t_2$ und der ersten Beschleunigung $a_1$ kann auch erfolgen, indem anstelle des Terms $a_1$*$\Delta t^2$ eine Konstante $A_1 = a_1$*$\Delta t^2$ berücksichtigt wird. Beispielsweise kann die erste Beschleunigung $a_1$ über alle Zyklen 101 konstant sein. Die erste Beschleunigung $a_1$ kann aber auch von Zyklus 101 zu Zyklus 101 variabel sein. Auch in diesem Fall kann der Term $a_1$*$\Delta t^2$ durch die Konstante $A_1$ ersetzt werden, wenn die Konstante $A_1$ so groß gewählt wird, dass sie die Variationen nach oben abschätzt.

Analog kann auch das Bestimmen 111 des zweiten Grenzwerts 55 unter Berücksichtigung der ersten Position 60, der früheren Position 58, der ersten Zeitdauer $\Delta t_1$, der zweiten Zeitdauer $\Delta t_2$ und der zweiten Beschleunigung $a_2$ erfolgen, indem anstelle des Terms $a_2$*$\Delta t^2$ eine Konstante $A_2 = a_2$*$\Delta t^2$ berücksichtigt wird. Ist die zweite Beschleunigung $a_2$ von Zyklus 101 zu Zyklus 101 variabel, ist die Konstante $A_2$ so klein zu wählen, dass sie die Variationen nach unten abschätzt. Die Konstante $A_1$ und/oder die Konstante $A_2$ können beispielsweise in der Auswerteeinrichtung 12 hinterlegt sein.

Zusätzlich zu der vorgegebenen Beschleunigung $a_1$ kann bei dem Bestimmen 110 des ersten Grenzwerts 54 auch eine vorgegebene Geschwindigkeit berücksichtigt werden. Bei der vorgegebenen Geschwindigkeit kann es sich beispielsweise um eine vorgegebene maximale Geschwindigkeit des beweglichen Elements 5 handeln. Durch die vorgegebene Geschwindigkeit kann insbesondere der Abstand des ersten Grenzwerts 54 von der ersten Position 60 nach oben begrenzt werden. Die obere Grenze kann unter Berücksichtigung der zweiten Zeitdifferenz $\Delta t_2$ auf die gleiche Weise bestimmt werden, wie es für den ersten Grenzwert 54 im Zusammenhang mit den Figuren 3 und 4 beschrieben ist.

Analog kann auch die bei dem Bestimmen 111 des zweiten Grenzwerts 55 neben der weiteren vorgegebenen Beschleunigung $a_2$ auch eine weitere vorgegebene Geschwindigkeit berücksichtigt werden. Bei der weiteren vorgegebenen Geschwindigkeit kann es sich insbesondere um eine minimale Geschwindigkeit des beweglichen Elements 5 handeln. Die weitere vorgegebene Geschwindigkeit kann den Abstand des zweiten Grenzwerts 55 von der ersten Position 60 insbesondere nach unten beschränken. Diese untere Grenze kann auf die gleiche Weise bestimmt werden, wie es für den zweiten Grenzwert 55 im Zusammenhang mit den Figuren 3 und 4 beschrieben ist.

Bei der in Figur 5 dargestellten Ausführungsform des Verfahrens 100 erstreckt sich der Teilbereich 52 der zu dem vorgegebenen Zeitpunkt möglichen Positionen des beweglichen Elements 5 zwischen dem ersten Grenzwert 54 und dem zweiten Grenzwert 55 und schließt die geschätzte Position 64 mit ein. Bei dem Bestimmen 130 der zweiten Position 62 aus dem Messsignal 20 kann angenommen werden, dass sich das bewegliche Element 5 zu dem vorgegebenen Zeitpunkt innerhalb des Teilbereichs 52 befindet und das Messsignal 20 eine Position innerhalb des Teilbereichs 52 repräsentiert.

Die in den Figuren 3, 4 und 5 dargestellten Ausführungsformen des Verfahrens 100 wurden jeweils für ein linear bewegliches Element 5 skizziert. Das Bestimmen des Teilbereichs 52, insbesondere das Bestimmen 110 des ersten Grenzwerts 54 und das Bestimmen 111 des zweiten Grenzwerts 55 kann analog auch bei Ausführungsformen angewendet werden, bei denen das bewegliche Element 5 rotatorisch beweglich ist.

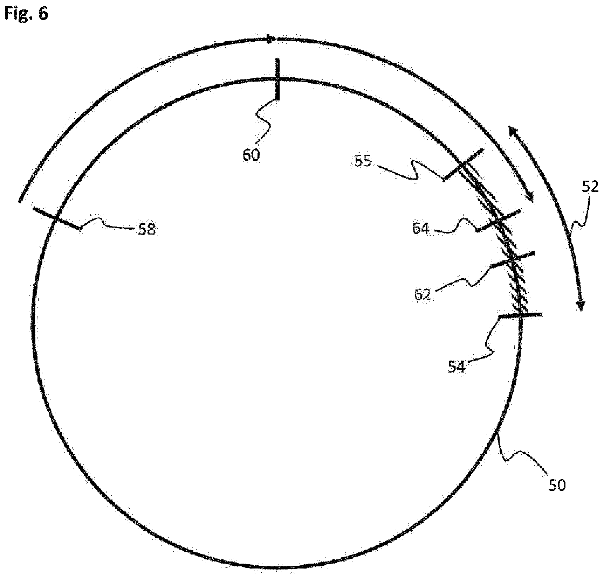

In Figur 6 ist beispielhaft das in Figur 5 dargestellte Bestimmen 110, 111 der ersten und zweiten Grenzwerte 54, 55 unter Berücksichtigung der früheren Position 58, der ersten Position 60, der ersten Zeitdauer $\Delta t_1$, der zweiten Zeitdauer $\Delta t_2$ und der vorgegeben ersten und zweiten Beschleunigungen $a_1$, $a_2$ für eine Ausführungsform mit rotatorisch beweglichem Element 5 dargestellt. Das Bestimmen des Teilbereichs 52 mittels des Bestimmens 110 des ersten Grenzwerts 54 und des Bestimmens 111 des zweiten Grenzwerts 55 erfolgt wie im Zusammenhang mit Figur 5 für das linear bewegliche Element 5 beschrieben.

Aufgrund der kreisförmigen Bewegung des beweglichen Elements 5 kann, beispielsweise bei genügend hoher Geschwindigkeit bzw. Drehzahl des beweglichen Elements 5, der Teilbereichs 52 einen Bereich umfassen, der in Drehrichtung zwischen der früheren Position 58 und der ersten Position 60 liegt. Insbesondere kann die geschätzte Position 64, in einem in Drehrichtung zwischen der früheren Position 58 und der ersten Position 60 liegenden Bereich liegen. Auch kann es notwendig sein, bei dem Bestimmen 110, 111 der Grenzwerte 54, 55 eine oder mehrere vollständige Umdrehungen des beweglichen Elements 5 zu berücksichtigen.

Insgesamt kann das Verfahren 100, wie es in den Figuren 5 und 6 dargestellt ist, iterative Zyklen 101 umfassen, bei denen im (n+1)-ten Zyklus zum Bestimmen 130 der die (n+1)-te Position darstellenden zweiten Position 62 die im n-ten Zyklus bestimmte Endposition als erste Position 60 und die im (n-1)-ten Zyklus bestimmte Endposition als frühere Position 58 berücksichtigt wird. Alternativ kann das Verfahren 100, wie in Figur 3 und 4 dargestellt, iterative Zyklen 101 umfassen, bei denen im (n+1)-ten Zyklus zum Bestimmen 130 der die (n+1)-te Position darstellenden zweiten Position 62 die im n-ten Zyklus bestimmte Endposition als erste Position 60 berücksichtigt wird.

Zu Beginn der Ausführung des Verfahrens 100, beispielsweise nach einem Start des Maschinensystems 1 oder der Auswerteeinrichtung 14, liegen in der Regel noch keine Endpositionen aus vergangenen Zyklen 101 vor. Daher umfasst das Verfahren, wie in Figur 2 dargestellt, als einen den Zyklen 101 vorangestellten Schritt ein anfängliches Bestimmen 102 der Position des beweglichen Elements 5.

Bei dem anfänglichen Bestimmen 102 der Position des beweglichen Elements 5 wird davon ausgegangen, dass sich das bewegliche Element 5 an einer beliebigen Position innerhalb des Gesamtbereichs 60 möglicher Positionen befinden kann. Daher wird bei dem anfänglichen Bestimmen 102 der Position des beweglichen Elements 5 anstelle des Teilbereichs 52 der vollständige Gesamtbereich 60 berücksichtigt. Bei den in Figur 3 und 4 dargestellten Ausführungsformen des Verfahrens 100 erfolgt im Rahmen des anfänglichen Bestimmens der Position ein erstes Einlesen des Messsignals 20 und ein erstes Bestimmen der Endposition aus dem Messsignal 20 unter Berücksichtigung des Gesamtbereichs 50. Anschließend wird der Zyklus 101 zum ersten Mal ausgeführt. Dabei wird die bei dem anfänglichen Bestimmen 102 der Endposition ermittelte Position bei dem Bestimmen 110 des Grenzwerts 54 des Teilbereichs 52 als die Anfangsposition berücksichtigt.

Bei den in Figur 5 und 6 dargestellten Ausführungsformen des Verfahrens 100 wird im Rahmen des anfänglichen Bestimmens 102 der Position nach dem ersten Einlesen des Messsignals 20 und dem ersten Bestimmen der Endposition ein zweites Einlesen des Messsignals 20 und ein zweites Bestimmen der Endposition vorgenommen. Das zweite Bestimmen der Endposition kann grundsätzlich auf die gleiche Weise erfolgen, wie es für die Endposition im Zusammenhang mit dem Bestimmen 130 der zweiten Position 62 beschrieben wurde. Allerdings wird bei dem zweiten Bestimmen der Endposition der vollständige Gesamtbereich 50 anstelle des Teilbereichs 52 möglicher Positionen berücksichtigt. Alternativ kann bei dem zweiten Bestimmen der Endposition anstelle des Gesamtbereichs auch ein Teilbereich berücksichtigt werden, dessen Grenzwerte 54, 55, 56, 57 unter Berücksichtigung vorgegebener Geschwindigkeiten auf die gleiche Art und Weise bestimmt wurden, wie es in Zusammenhang mit den Figuren 3 oder 4 beschreiben wurde. Dabei wird die bei dem ersten Bestimmen der Endposition bestimmte Position als Anfangsposition bzw. erste Position 60 verwendet.

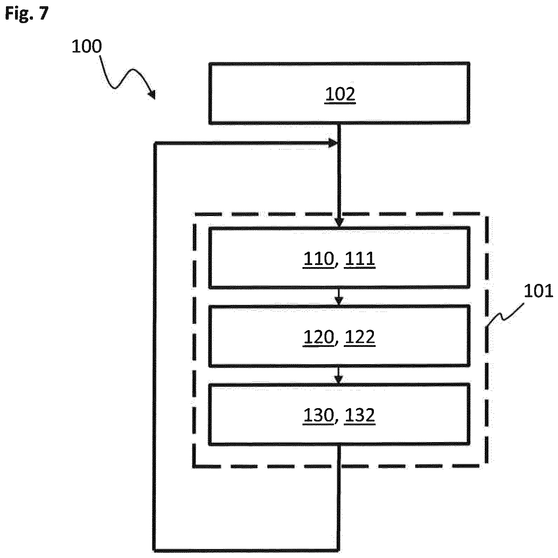

Das Bestimmen 130 der zweiten Position 62 aus dem Messsignal 20 kann einen Vergleich 132 des Messsignals 20 mit hinterlegten Messsignalen umfassen, wie es bei der in Figur 7 dargestellten Ausführungsform des Verfahrens 100 der Fall ist. Die hinterlegten Messsignale können jeweils Messsignale sein, die bekannte Positionen des beweglichen Elements 5 innerhalb des Gesamtbereichs 50 repräsentieren. Beispielsweise können die bekannten Positionen, für die Messsignale hinterlegt sind, den vollständigen Gesamtbereich 50 abdecken und jeweils voneinander beabstandete Positionen des beweglichen Elements 5 repräsentieren. Beispielsweise können die hinterlegten Messsignale jeweils gleichmäßig voneinander beabstandete und über den Gesamtbereich 50 verteilte bekannte Positionen des beweglichen Elements 5 repräsentieren.

Der Vergleich 132 des Messsignals 20 mit den hinterlegten Messsignalen kann mittels eines Ähnlichkeitsverfahrens oder eines Korrelationsverfahrens erfolgen. Dabei kann im Rahmen des Vergleichs 132 der hinterlegten Messsignale mit dem Messsignal 20 die wahrscheinlichste Position des beweglichen Elements 20 bestimmt werden, beispielsweise unter Anwendung der Methode der kleinsten Quadrate (KQ-Methode). Auch können Verfahren zur Mustererkennung angewendet werden. Die hinterlegten Messsignale können dabei Stützstellen für den Vergleich 132 bzw. die bei dem Vergleich 132 angewendeten Verfahren bilden.

Die hinterlegten Messsignale bilden eine Gesamtmenge hinterlegter Messsignale und repräsentieren Positionen des beweglichen Elements 5, welche über den Gesamtbereich 50 verteilt sind. Bei dem Bestimmen 130 der zweiten Position 62 erfolgt der Vergleich 132 des Messsignals 20 nicht mit der Gesamtmenge hinterlegter Messsignale, sondern lediglich mit hinterlegten Messsignalen einer Teilmenge der Gesamtmenge. Die hinterlegten Messsignale der Teilmenge repräsentieren jeweils nur Positionen des beweglichen Elements innerhalb des bei dem Bestimmen 130 der zweiten Position 62 berücksichtigten Teilbereichs 52 der zu dem vorgegebenen Zeitpunkt möglichen Positionen des beweglichen Elements 5. Die Teilmenge umfasst also ausschließlich und vollständig diejenigen hinterlegten Messsignale, die Positionen innerhalb des Teilbereichs 52 der zu dem vorgegeben Zeitpunkt möglichen Positionen des beweglichen Elements 5 repräsentieren.

Alle hinterlegten Messsignale der Teilmenge sind auch in der Gesamtmenge hinterlegter Messsignale enthalten, die Teilmenge ist also in der Gesamtmenge enthalten. Die Teilmenge enthält allerdings weniger hinterlegte Messsignale als die Gesamtmenge.

Zum Bestimmen der für das Bestimmen 130 der zweiten Position 62 heranzuziehenden Teilmenge hinterlegter Messsignale wird der Teilbereich 52 der zu dem vorgegebenen Zeitpunkt möglichen Positionen bestimmt, wie es im Zusammenhang mit den Figuren 1 bis 6 beschrieben ist. Insbesondere wird mindestens der erste Grenzwert 54 des Teilbereichs 52 bestimmt. Der erste Grenzwert 54 definiert eine Position, welche die hinterlegten Messsignale der Teilmenge von den hinterlegten Messsignalen, die nicht in der Teilmenge enthalten sind, abgrenzt. Genauso definieren die übrigen Grenzwerte 55, 56, 57 jeweils Positionen, welche die hinterlegten Messsignale der Teilmenge von den hinterlegten Messsignalen, die nicht in der Teilmenge enthalten sind, abgrenzen. Beispielsweise umfasst die Teilmenge hinterlegter Messsignale bei der in Figur 5 dargestellten Ausführungsform des Verfahrens 100 alle Messsignale, die Positionen zwischen dem ersten Grenzwert 54 und dem zweiten Grenzwert 55 repräsentieren.

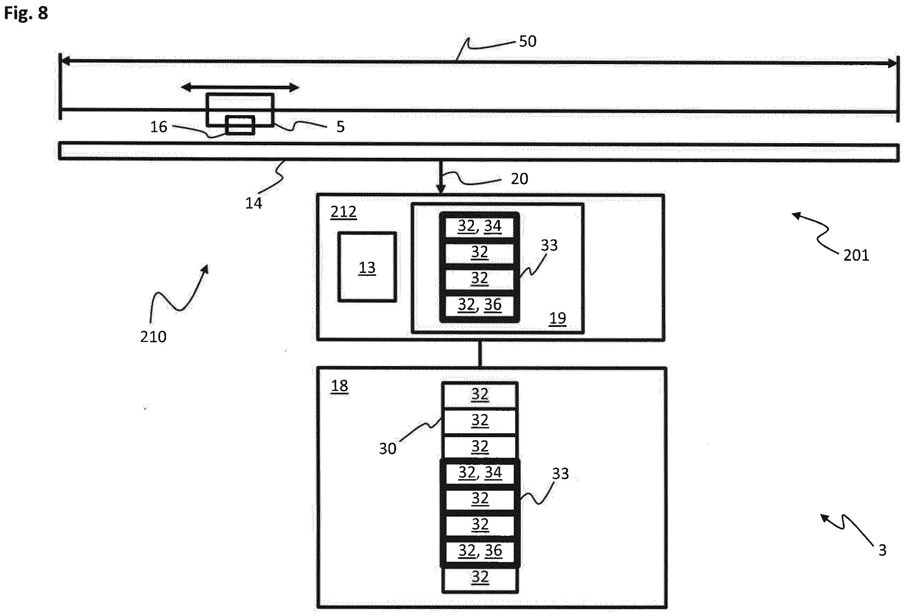

Figur 8 zeigt ein weiteres Maschinensystem 201. Soweit im Folgenden keine Unterschiede beschrieben werden, ist das weitere Maschinensystem 201 ausgebildet wie das Maschinensystem 1. Insbesondere umfasst das weitere Maschinensystem 201 die Maschine 3 mit dem beweglichen Element 5.

Im Unterschied zu dem Maschinensystem 1 umfasst das Maschinensystem 201 anstelle des Systems 10 zur Positionsbestimmung ein weiteres System 210 zur Positionsbestimmung des beweglichen Elements 5. Das weitere System 210 zur Positionsbestimmung ist, soweit im Folgenden keine Unterschiede beschrieben werden, ausgebildet wie das System 10 zur Positionsbestimmung. Insbesondere ist das weitere System 210 dazu ausgebildet, das Verfahren 100 zur Positionsbestimmung auszuführen, wie es im Zusammenhang mit den Figuren 2 bis 7 beschrieben ist. Das weitere System 210 zur Positionsbestimmung umfasst anstelle der Auswerteeinrichtung 14 eine weitere Auswerteeinrichtung 214, welche, soweit im Folgenden keine Unterschiede beschrieben werden, ausgebildet ist wie die Auswerteeinrichtung 14.

Bei dem weiteren System 210 zur Positionsbestimmung werden die Positionen des beweglichen Elements 5 innerhalb des Gesamtbereichs 50 durch Datenelemente 32 einer Datenstruktur 30 repräsentiert. Die Datenelemente 32 können insgesamt Positionen des beweglichen Elements 5 repräsentieren, die über den vollständigen Gesamtbereich 50 verteilt sind. Beispielsweise können die Datenelemente 32 gleichmäßig voneinander beabstandete und über den Gesamtbereich 50 verteilte Positionen repräsentieren. Insbesondere kann jedes der Datenelemente 32 jeweils eines der hinterlegten Messsignale enthalten. Die Datenelemente 32 können beispielsweise insgesamt die Gesamtmenge der hinterlegten Messsignale enthalten oder aus der Gesamtmenge bestehen.

Die Datenstruktur 32 kann eine Datentabelle bzw. eine Datenmatrix sein und die Datenelemente 32 können jeweils ein Eintrag bzw. eine Spalte oder Zeile der Datentabelle bzw. der Datenmatrix sein. Insbesondere kann jedes Datenelement 32 jeweils ein Datum für jeden einzelnen der Sensoren der Signalerfassungseinrichtung 14 umfassen. Die Datenelemente 32 können insbesondere als Vektoren von Daten bzw. von Messwerten der Sensoren ausgebildet sein. Die Datenelemente 32 können jeweils durch einen Index oder mehrere Indizes repräsentiert werden, welche die Position der Datenelemente 32 in der Datenstruktur 30 beschreiben.

Die zu dem vorgegebenen Zeitpunkt möglichen Positionen des beweglichen Elements 5, die den Teilbereich 52 bilden, werden durch eine Teilmenge 33 der Datenelemente 32 repräsentiert. Die Teilmenge 33 umfasst alle Datenelemente 32, die Positionen innerhalb des Teilbereichs 52 repräsentieren. Insbesondere kann die Teilmenge 33 der Datenelemente 32 alle hinterlegten Messsignale umfassen, die Positionen innerhalb des Teilbereichs 52 repräsentieren. Dann entspricht die Teilmenge 33 von Datenelementen 32 der bei dem Vergleich 122 mit dem Messsignal 20 herangezogenen Teilmenge von hinterlegten Messsignalen.

Der erste Grenzwert 54 des Teilbereichs 52 definiert ein erstes Datenelement 34 der Teilmenge 33 von Datenelementen 32. Das erste Datenelement 34 kann beispielsweise eine Position repräsentieren, die dem ersten Grenzwert 54 des Teilbereichs 52 entspricht. Das erste Datenelement 34 kann aber auch eine Position repräsentieren, für die ein Messsignal hinterlegt ist und die innerhalb des Teilbereichs 52 dem ersten Grenzwert 54 am Nächsten liegt. Auf die gleiche Weise definiert der zweite Grenzwert 55 des Teilbereichs 52 ein zweites Datenelement 36 der Teilmenge 33 der Datenstruktur 30. Die Teilmenge 33 der Datenelemente 32 umfasst alle Datenelemente 32 zwischen dem ersten Datenelement 34 und dem zweiten Datenelement 36. Insbesondere kann die Teilmenge 33 alle Datenelemente 32 umfassen, die Positionen des beweglichen Elements 5 repräsentieren, die zwischen dem ersten Grenzwert 54 und dem zweiten Grenzwert 55 liegen. Die Teilmenge 33 umfasst weniger Datenelemente 32 als die gesamte Datenstruktur 30.

Bei dem Bestimmen 130 der zweiten Position 60 des beweglichen Elements 5 werden nur die Datenelemente 32 der Teilmenge 33 der Datenstruktur 30 berücksichtigt. Insbesondere können nur die in Datenelementen 32 der Teilmenge 33 hinterlegten Messsignale bekannter Positionen des beweglichen Elements 5 bei dem Vergleich 132 des Messsignals 20 mit den hinterlegten Messsignalen herangezogen werden. Nachdem die Teilmenge 33 weniger Datenelemente 32 umfasst als die gesamte Datenstruktur 30, werden bei dem Bestimmen 130 der zweiten Position 60 aus dem Messsignal 20 weniger Datenelemente 32 berücksichtigt, als bei einem Vergleich mit der gesamten Datenstruktur 30.

Das weitere System 210 zur Positionsbestimmung kann, wie in Figur 8 gezeigt, einen Speicherbaustein 18 umfassen, welcher mit der weiteren Auswerteeinrichtung 212 über eine Datenleitung verbunden ist. Über die Datenleitung können Daten zwischen dem Speicherbaustein 18 und der weiteren Auswerteeinrichtung 212 ausgetauscht werden. Insbesondere können die Datenelemente 32 ausgetauscht werden. Der Speicherbaustein 18 kann das Speicherelement bilden, in dem die Gesamtmenge hinterlegter Messsignale, die jeweils Positionen des beweglichen Elements 5 innerhalb des Gesamtbereichs 50 repräsentieren, hinterlegt ist. Bei dem Speicherbaustein 18 kann es sich um einen externen Speicherbaustein handeln, der getrennt von der weiteren Auswerteeinrichtung 212 angeordnet ist. Der Speicherbaustein 18 kann beispielsweise als *programmable read only memory* (PROM) ausgebildet sein.

Insbesondere kann der Speicherbaustein 18, wie in Figur 8 dargestellt, die Datenstruktur 30 umfassen. Das Verfahren 100 zur Positionsbestimmung des beweglichen Elements 5 kann ein Laden 122 der Teilmenge 33 der Datenstruktur 30 aus dem Speicherbaustein 18 umfassen. Das Laden 122 kann nach dem Bestimmen 110 des ersten Grenzwerts 54 des Teilbereichs und gegebenenfalls nach dem Bestimmen 111 der weiteren Grenzwerte 55, 56, 57 des Teilbereichs 52 und vor dem Bestimmen 130 der zweiten Position 62 erfolgen. Insbesondere kann das Laden 122 der hinterlegten Messsignale der Teilmenge 33 gleichzeitig mit dem Einlesen 120 des Messsignals 20 erfolgen, wie es bei der in Figur 7 dargestellten Ausführungsform des Verfahrens 100 der Fall ist.

Das Laden 122 der Datenelemente 32 der Teilmenge 33 der Datenstruktur 30 kann einen adressbasierten Zugriff auf den Speicherbaustein 18 umfassen. Insbesondere können die Datenelemente 23 der Teilmenge 33 jeweils durch einen Index bezeichnet und mittels eines indexbasierten Zugriffs auf den Speicherbaustein 18 geladen werden. Insbesondere können alle Datenelemente 32, die zwischen dem ersten Datenelement 34 und dem zweiten Datenelement 36 liegen bzw. deren Indizes zwischen dem Index des ersten Datenelements 34 und dem Index des zweiten Datenelements 36 liegen. Ein adressbasierter oder indexbasierte Zugriff auf die Datenelemente 32 erlaubt einen schnellen Zugriff auf die Teilmenge 33, ohne die gesamte Datenstruktur 30 durchlaufen zu müssen. Bei Maschinen 3 mit rotatorisch beweglichen Elementen 5 erfolgt nach einer vollständigen Umdrehung ein Übergang von der durch das letzte Datenelement 32 der Datenstruktur 30 repräsentierten Position zu der durch das Anfangselement 32 der Datenstruktur 33 repräsentierten Position. Dies kann bei einem adressbasierten oder indexbasierten Zugriff auf den Speicherbaustein durch eine Modulo-Operation bei dem Bestimmen der Indizes der einzulesenden Datenelemente 32 berücksichtigt werden.

Die Datenelemente 32 der Teilmenge 33 können beim Laden 122 in einen internen Speicherbaustein 19 der weiteren Auswerteeinrichtung 212 geladen werden. Bei dem internen Speicherbaustein 19 kann es sich um einen Arbeitsspeicher der weiteren Auswerteeinrichtung 212 handeln. Insbesondere kann es sich bei dem internen Speicherbaustein um einen *random access memory* (RAM) handeln. Der interne Speicherbaustein 19 und die weitere Auswerteeinrichtung 212 können derart ausgebildet sein, dass ein Zugriff auf die in dem internen Speicherbaustein 19 geladenen Datenelemente 32 schneller erfolgen kann als auf die in dem Speicherbaustein 18 hinterlegten Datenelemente 32. Der interne Speicherbaustein 19 kann weniger Speicherplatz umfassen als der Speicherbaustein 18.

Bei dem anfänglichen Bestimmen 102 der Position kann der Gesamtbereich 50 vollständig in kleinere Teilräume aufgeteilt werden, welche beim Bestimmen 130 der zweiten Position 62 nacheinander berücksichtigt werden. Insbesondere können jeweils den Teilräumen entsprechende Untermengen der Datenelemente 32 nacheinander aus dem Speicherbaustein 18 in den internen Speicherbaustein 19 geladen werden und mit dem Messsignal 20 verglichen werden. Nachdem die Datenelemente 32 aller Untermengen geladen und verglichen worden sind, kann die Position des beweglichen Elements 5 basierend auf den Vergleichen mit allen Untermengen bestimmt werden.

Zum Ausführen des Verfahrens 100 können die Auswerteeinrichtungen 12,212 eine Verarbeitungseinheit 13 umfassen. Bei der Verarbeitungseinheit 13 kann es sich um eine programmierbare Datenverarbeitungseinheit, beispielsweise um einen Mikroprozessor oder einen Mikrocontroller, handeln.

Bei alternativen Ausführungsformen des Verfahrens 100 können die Verfahrensschritte 110, 111, 120, 122, 130, 132 auch in einer anderen als der in den Figuren 2 und 7 dargestellten Reihenfolge ausgeführt werden. Insbesondere kann das Bestimmen 110 des ersten Grenzwerts 54, das Bestimmen 111 des zweiten Grenzwerts 55, das Bestimmen der weiteren Grenzwerte 56, 57 bzw. das Bestimmen des Teilbereichs 52 und/oder gegebenenfalls das Laden 122 der Datenelemente 32 auch nach dem Einlesen 120 des Messsignals 20 erfolgen.

Bei dem beschriebenen Verfahren 100 zur Positionsbestimmung werden nach dem anfänglichen Bestimmen 102 der Position des beweglichen Elements 5 zyklisch weitere Positionen des beweglichen Elements 5 bestimmt. Dabei wird in jedem Zyklus 101 ausgehend von mindestens einer zuvor bestimmten Position als Anfangsposition unter Berücksichtigung mindestens einer Randbedingung an die Bewegung des beweglichen Elements 5 der Teilbereich 52 bestimmt, der bei dem Bestimmen 130 der Endposition des Zyklus 101 zu berücksichtigen ist. Der Teilbereich 52 gibt denjenigen Bereich innerhalb des Gesamtbereichs 50 an, in welchem sich die zu bestimmende Endposition befinden kann.

Der Teilbereich 52 kann insbesondere ermittelt werden unter Berücksichtigung der aktuellen gemessenen Geschwindigkeit, der maximalen Geschwindigkeit und der maximalen Beschleunigung des beweglichen Elements 5. Die aktuelle gemessene Geschwindigkeit kann linearisiert aus in vorangegangenen Zyklen 101 bestimmten Endpositionen bestimmt werden. Die maximale Geschwindigkeit und die maximale Beschleunigung können insbesondere aus den mechanischen Randbedingungen der Maschine 3 bekannt sein und von einer Steuerungs-Elektronik der Maschine 3 überwacht werden. Der Teilbereich 52 wird begrenzt durch die minimale und die maximale Positionsänderung, die das bewegliche Element 5 ausgehend von der letzten bekannten Endposition ausführen kann.

Bei dem Bestimmen 130 der Position des beweglichen Elements muss nicht mehr die gesamte Datenstruktur 30 durchlaufen werden, sondern es reicht aus, nur die Teilmenge 33 der Datenstruktur 30 zu durchlaufen, welche den Teilbereich 52 repräsentiert. Dadurch wird die Suchzeit zum Bestimmen 130 der Position des beweglichen Elements 5 erheblich reduziert. Die Teilmenge 33 der Datenstruktur 30 kann aus dem gegebenenfalls langsamen externen Speicherbaustein 18 bis zur Erfassung bzw. bis zum Einlesen 120 des Messsignals 20 vorgeladen werden. Damit muss nur noch ein kleiner Teil des Inhalts des externen Speicherbausteins 18 in die Auswerteeinrichtung 12, 212 geladen werden und der interne Speicherbaustein 19 der Auswerteeinrichtung 12, 212 kann kleiner sein als der externe Speicherbaustein 18.

Gegenüber einem Verfahren, bei dem die gesamte Datenstruktur 30 durchlaufen wird, wird durch das Verfahren 100 die Suchzeit beim Bestimmen 130 der Position des beweglichen Elements 5 verkürzt. Dies verringert auch die Totzeit bzw. die Verarbeitungszeit eines das Verfahren 100 anwendenden Systems 10 zur Positionsbestimmung, beispielsweise eines das Verfahren 100 anwendenden Feedbacksystems. Im Vergleich zum vollständigen Durchlaufen der Datenstruktur 30 werden bei dem Verfahren 100 zum Bestimmen 130 der Position weniger Rechenoperationen und weniger Energie benötigt. In der Auswerteeinrichtung 12 kann ein kleinerer interner Speicherbaustein 19 angeordnet sein und die Datenstruktur 30 kann, da weniger Datenelemente 32 gelesen werden müssen, in einem langsameren (externen) Speicherbaustein 18 abgelegt werden.

Bezugszeichenliste

| 1 | Maschinensystem |
| 3 | Maschine |
| 5 | bewegliches Element |
| 10 | System zur Positionsbestimmung |
| 12 | Auswerteeinrichtung |
| 13 | Verarbeitungseinheit |
| 14 | Signalerfassungseinrichtung |
| 16 | Gebereinheit |
| 18 | Speicherbaustein |
| 19 | interner Speicherbaustein |
| 20 | Messsignal |
| 30 | Datenstruktur |
| 32 | Datenelemente der Datenstruktur |
| 33 | Teilmenge der Datenelemente der Datenstruktur |
| 34 | erstes Datenelement der Teilmenge der Datenstruktur |
| 36 | zweites Datenelement der Teilmenge der Datenstruktur |
| 50 | Gesamtbereich möglicher Positionen |
| 52 | Teilbereich möglicher Positionen |
| 54 | erster Grenzwert des Teilbereichs |
| 55 | zweiter Grenzwert des Teilbereichs |
| 56 | dritter Grenzwert des Teilbereichs |
| 57 | vierter Grenzwert des Teilbereichs |
| 58 | frühere Position |
| 60 | erste Position |
| 62 | zweite Position |
| 64 | geschätzte Position |
| 70 | erste Richtung |
| 72 | zweite Richtung |
| 100 | Verfahren zur Positionsbestimmung |
| 101 | Zyklus |
| 102 | anfängliches Bestimmen der Position |
| 110 | Bestimmen eines Grenzwerts des Teilbereichs |
| 111 | Bestimmen eines weiteren Grenzwerts des Teilbereichs |
| 120 | Einlesen eines Messsignals |
| 122 | Laden der Elemente der Teilmenge |
| 130 | Bestimmen einer zweiten Position aus dem Messsignal |
| 132 | Vergleich des Messsignals |
| 201 | weiteres Maschinensystem |
| 210 | weiteres System zur Positionsbestimmung |
| 212 | weitere Auswerteeinrichtung |
| $\Delta t_1$ | erste Zeitdauer |
| $\Delta t_2$ | zweite Zeitdauer |

Patentansprüche

1. Verfahren (100) zur Positionsbestimmung eines innerhalb eines Gesamtbereichs (50) beweglichen Elements (5) einer Maschine (3) aus einem Messsignal (20), wobei das Verfahren (100) folgende Schritte umfasst:

- Bestimmen (110) eines ersten Grenzwerts (54) eines innerhalb des Gesamtbereichs (50) liegenden Teilbereichs (52) von zu einem vorgegebenen Zeitpunkt möglichen Positionen des beweglichen Elements (5), wobei der erste Grenzwert (54) unter Berücksichtigung einer eine Anfangsposition bildenden ersten Position (60) des beweglichen Elements (5) und unter Berücksichtigung einer ersten Randbedingung an die Bewegung des beweglichen Elements (5) bestimmt wird,

wobei die erste Randbedingung angibt, wie weit sich das bewegliche Element (5) von der ersten Position (60) bis zu dem vorgegebenen Zeitpunkt höchstens entfernt haben kann,

- Bestimmen (111) eines zweiten Grenzwerts (55) des Teilbereichs (52) von zu dem vorgegebenen Zeitpunkt möglichen Positionen des beweglichen Elements (5), wobei der zweite Grenzwert (55) unter Berücksichtigung der ersten Position (60) des beweglichen Elements (5) und unter Berücksichtigung einer zweiten Randbedingung an die Bewegung des beweglichen Elements (5) bestimmt wird,

wobei die zweite Randbedingung angibt, wie weit sich das bewegliche Element (5) von der ersten Position (60) bis zu dem vorgegebenen Zeitpunkt mindestens entfernt haben muss,

- Einlesen (120) des zu dem vorgegebenen Zeitpunkt erfassten Messsignals (20),

- Bestimmen (130) einer zweiten Position (62) des beweglichen Elements (5) als eine Endposition aus dem Messsignal (20) unter Berücksichtigung lediglich des Teilbereichs (52) der zu dem vorgegebenen Zeitpunkt möglichen Positionen.

2. Verfahren (100) nach Anspruch 1,
wobei die erste Randbedingung durch eine mechanische Randbedingung der Maschine (3), insbesondere durch eine Massenträgheit des beweglichen Elements (5) und/oder eine Antriebskraft eines das bewegliche Element (5) antreibenden Antriebs, vorgegeben ist.

3. Verfahren (100) nach einem der vorhergehenden Ansprüche,
wobei der erste Grenzwert (54) und der zweite Grenzwert (55) auf Grundlage der ersten Position (60) des beweglichen Elements (5) und einer Geschwindigkeit des beweglichen Elements (5) derart bestimmt werden, dass der Teilbereich (52) eine geschätzte Position (64) des beweglichen Elements (5) umfasst,

wobei die geschätzte Position (64) diejenige Position ist, an der sich das bewegliche Element (5) zu dem vorgegebenen Zeitpunkt befinden würde, wenn sich das bewegliche Element (5) ausgehend von der ersten Position (60) unbeschleunigt mit der Geschwindigkeit bewegen würde,

wobei bei dem Bestimmen (110) des ersten Grenzwerts (54) eine maximale Beschleunigung des beweglichen Elements (5) als erste Randbedingung berücksichtigt wird, wobei der erste Grenzwert (54) derart bestimmt wird, dass ein Abstand zwischen der ersten Position (60) und dem ersten Grenzwert (54) eine Beschleunigung des beweglichen Elements (5) mit der maximalen Beschleunigung berücksichtigt,

wobei bei dem Bestimmen (111) des zweiten Grenzwerts (55) eine minimale Beschleunigung des beweglichen Elements (5) als zweite Randbedingung berücksichtigt wird,

wobei der zweite Grenzwert (55) derart bestimmt wird, dass ein Abstand zwischen der ersten Position (60) und dem zweiten Grenzwert (55) eine Beschleunigung des beweglichen Elements (5) mit der minimalen Beschleunigung berücksichtigt.

4. Verfahren (100) nach Anspruch 3,
wobei das Bestimmen (110) des ersten Grenzwerts (54), das Bestimmen (111) des zweiten Grenzwerts (55), das Einlesen (120) des Messsignals (20) und das Bestimmen (130) der zweiten Position (62) zyklisch wiederholt werden und
wobei die in einem vergangenen Zyklus (101) bestimmte Endposition in einem dem vergangenen Zyklus (101) nachfolgenden aktuellen Zyklus (101) als die erste Position (60) berücksichtigt wird.

5. Verfahren (100) nach Anspruch 4,
wobei das Bestimmen (110) des ersten Grenzwerts (54) unter Berücksichtigung der ersten Position (60), einer früheren Position (58) des beweglichen Elements (5), einer ersten Zeitdauer und einer zweiten Zeitdauer erfolgt,

wobei die frühere Position (58) in einem dem vergangenen Zyklus (101) vorangegangenen vorvergangenen Zyklus (101) als die Endposition bestimmt worden und in dem vergangenen Zyklus (101) als die Anfangsposition berücksichtigt worden ist,

wobei die erste Zeitdauer die Zeit zwischen dem vorgegebenen Zeitpunkt des vorvergangenen Zyklus (101) und dem vorgegebenen Zeitpunkt des vergangenen Zyklus (101) angibt,

wobei die zweite Zeitdauer die Zeit zwischen dem vorgegebenen Zeitpunkt des vergangenen Zyklus (101) und dem vorgegebenen Zeitpunkt des aktuellen Zyklus (101) angibt.

6. Verfahren (100) nach Anspruch 5,
wobei die Geschwindigkeit linearisiert bestimmt wird aus der Differenz der ersten Position (60) und der in dem vorvergangenen Zyklus (101) bestimmten früheren Position (58).

7. Verfahren (100) nach Anspruch 6,
wobei die erste Zeitdauer und die zweite Zeitdauer gleich sind und einer Zykluszeit entsprechen,
wobei der Abstand zwischen der ersten Position (60) und dem ersten Grenzwert (54) unter Berücksichtigung der ersten Position (60), der früheren Position (58), der Geschwindigkeit und der ersten Beschleunigung mindestens zu
$P_n - P_{n-1} + a_1 * \Delta t^2$ bestimmt wird,
wobei $P_n$ die erste Position (60), $P_{n-1}$ die frühere Position (58), $a_1$ die erste Beschleunigung und $\Delta t$ die Zykluszeit bezeichnet.

8. Verfahren (100) nach einem der vorhergehenden Ansprüche,
wobei bei dem Bestimmen (110) des ersten Grenzwerts (54) der Abstand zwischen der ersten Position (60) und dem ersten Grenzwert (54) nach oben abgeschätzt wird und/oder
wobei bei dem Bestimmen (111) des zweiten Grenzwerts (55) der Abstand zwischen der ersten Position (60) und dem zweiten Grenzwert (55) nach unten abgeschätzt wird.

9. Verfahren (100) nach einem der vorhergehenden Ansprüche,
wobei das Bestimmen (130) der zweiten Position (62) des beweglichen Elements (5) einen Vergleich (132) des Messsignals (20) mit hinterlegten Messsignalen einer Teilmenge hinterlegter Messsignale umfasst,
wobei die Teilmenge in einer Gesamtmenge hinterlegter Messsignale enthalten ist,
wobei die hinterlegten Messsignale der Gesamtmenge Positionen des beweglichen Elements (5) innerhalb des Gesamtbereichs (50) repräsentieren,
wobei die hinterlegten Messsignale der Teilmenge jeweils nur Positionen des beweglichen Elements (5) innerhalb des Teilbereichs (52) der zu dem vorgegebenen Zeitpunkt möglichen Positionen repräsentieren und wobei die Teilmenge weniger hinterlegte Messsignale als die Gesamtmenge umfasst.

10. Verfahren (100) nach einem der vorhergehenden Ansprüche,
wobei Positionen des beweglichen Elements (5) innerhalb des Gesamtbereichs (50) durch Datenelemente (32) einer Datenstruktur (30) repräsentiert werden,
wobei Positionen innerhalb des Teilbereichs (52) der zu dem vorgegebenen Zeitpunkt möglichen Positionen durch Datenelemente (32) einer Teilmenge (33) der Datenelemente (32) der Datenstruktur (30) repräsentiert werden,
wobei der erste Grenzwert (54) des Teilbereichs (52) ein erstes Datenelement (34, 36) der Teilmenge (33) der Datenstruktur (30) definiert,
wobei der zweite Grenzwert (55) des Teilbereichs (52) ein zweites Datenelement (34, 36) der Teilmenge (33) der Datenstruktur (30) definiert,
wobei die Teilmenge (33) weniger Datenelemente (32) umfasst als die gesamte Datenstruktur (30) und wobei das Bestimmen (130) der zweiten Position (62) des beweglichen Elements (5) unter Berücksichtigung lediglich der Teilmenge (33) der Datenelemente (32) der Datenstruktur (30) erfolgt.

11. Verfahren (100) nach Anspruch 10,
wobei das Verfahren (100) ein Laden (122) der Teilmenge (33) der Datenelemente (32) der Datenstruktur (30) aus einem die Datenstruktur (30) enthaltenden Speicherbaustein (18) umfasst, und
wobei das Laden (122) der Datenelemente (32) der Teilmenge (33) der Datenstruktur (30) aus dem Speicherbaustein (18) vor dem Bestimmen (130) der zweiten Position (62) erfolgt.

12. System (10, 210) zur Positionsbestimmung eines innerhalb eines Gesamtbereichs (50) beweglichen Elements (5) einer Maschine (3) aus einem Messsignal (20),
wobei das System (10, 210) eine Auswerteeinrichtung (12, 212) umfasst,
wobei die Auswerteeinrichtung (12, 212) dazu ausgebildet ist, einen ersten Grenzwert (54) eines innerhalb des Gesamtbereichs (50) liegenden Teilbereichs (52) von zu einem vorgegebenen Zeitpunkt möglichen Positionen des beweglichen Elements (5) zu bestimmen,
wobei die Auswerteeinrichtung (12, 212) dazu ausgebildet ist, den ersten Grenzwert (54) unter Berücksichtigung einer eine Anfangsposition bildenden ersten Position (60) des beweglichen Elements (5) und unter Berücksichtigung einer ersten Randbedingung an die Bewegung des beweglichen Elements (5) zu bestimmen,
wobei die erste Randbedingung angibt, wie weit sich das bewegliche Element (5) von der ersten Position (60) bis zu dem vorgegebenen Zeitpunkt höchstens entfernt haben kann,
wobei die Auswerteeinrichtung (12, 212) dazu ausgebildet ist, einen zweiten Grenzwert (55) des Teilbereichs (52) zu bestimmen,
wobei die Auswerteeinrichtung (12, 212) dazu ausgebildet ist, den zweiten Grenzwert (55) unter Berücksichtigung der ersten Position (60) des beweglichen Elements (5) und unter Berücksichtigung einer zweiten Randbedingung an die Bewegung des beweglichen Elements (5) zu bestimmen,
wobei die zweite Randbedingung angibt, wie weit sich das bewegliche Element (5) von der ersten Position (60) bis zu dem vorgegebenen Zeitpunkt mindestens entfernt haben muss,

wobei die Auswerteeinrichtung (12, 212) dazu ausgebildet ist, das zu dem vorgegebenen Zeitpunkt erfasste Messsignal (20) einzulesen,

wobei die Auswerteeinrichtung (12, 212) dazu ausgebildet ist, eine zweite Position (62) des beweglichen Elements (5) als eine Endposition aus dem Messsignal (20) unter Berücksichtigung lediglich des Teilbereichs (52) der zu dem vorgegebenen Zeitpunkt möglichen Positionen zu bestimmen.

13. System (10, 210) zur Positionsbestimmung gemäß Anspruch 12,

wobei die Auswerteinrichtung (12, 212) dazu ausgebildet ist, das Bestimmen (110) des ersten Grenzwerts (54), das Bestimmen (111) des zweiten Grenzwerts (55), das Einlesen (120) des Messsignals (20) und das Bestimmen (130) der zweiten Position (62) zyklisch zu wiederholen, und

wobei die Auswerteeinrichtung (12, 212) dazu ausgebildet ist, die in einem vergangenen Zyklus (101) bestimmte Endposition in einem dem vergangenen Zyklus (101) nachfolgenden aktuellen Zyklus (101) als die erste Position (60) zu berücksichtigen.

14. System (10, 210) zur Positionsbestimmung gemäß einem der Ansprüche 12 bis 13,

wobei das System (10, 210) einen mit der Auswerteeinrichtung (12, 212) verbundenen Speicherbaustein (18) umfasst,

wobei der Speicherbaustein (18) dazu ausgebildet ist, eine Datenstruktur (30) zu speichern, deren Datenelemente (32) Positionen des beweglichen Elements (5) innerhalb des Gesamtbereichs (50) repräsentieren,

wobei die Auswerteeinrichtung (12, 212) dazu ausgebildet ist, eine Teilmenge (33) der Datenelemente (32) der Datenstruktur (30) aus dem Speicherbaustein (18) zu laden, so dass die geladenen Datenelemente (32) der Teilmenge (33) nur Positionen innerhalb des Teilbereichs (52) der zu dem vorgegebenen Zeitpunkt möglichen Positionen repräsentieren und die Teilmenge (33) weniger Datenelemente (32) umfasst als die gesamte Datenstruktur (30),

wobei der erste Grenzwert (54) des Teilbereichs (52) ein erstes Datenelement (34, 36) der Teilmenge der Datenstruktur (30) definiert,

wobei der zweite Grenzwert (55) des Teilbereichs (52) ein zweites Datenelement (34, 36) der Teilmenge (33) der Datenstruktur (30) definiert,

wobei die Auswerteeinrichtung (12, 212) dazu ausgebildet ist, die zweite Position (62) des beweglichen Elements (5) unter Berücksichtigung lediglich der Teilmenge (33) der Datenelemente (32) der Datenstruktur (30) zu bestimmen, und

wobei die Auswerteeinrichtung (12, 212) dazu ausgebildet ist, die Teilmenge (33) der Datenelemente (32) der Datenstruktur (30) aus dem Speicherbaustein (18) vor dem Bestimmen (130) der zweiten Position (62) zu laden.

15. System (10, 210) nach einem der Ansprüche 12 bis 14,

wobei das System (10. 210) die Maschine (3) mit dem innerhalb des Gesamtbereichs (50) beweglichen Element (5) umfasst.

16. System (10, 210) nach Anspruch 15, wobei das System (10, 210) ein Antrieb und die Maschine (3) ein Elektromotor ist.

**Claims**

1. Method (100) for determining the position of an element (5) of a machine (3) from a measurement signal (20), which element is movable within a total range (50),

wherein the method (100) comprises the following steps of:

- determining (110) a first limit value (54) of a partial range (52) of positions of the movable element (5) which are possible at a predefined time, said partial range being within the total range (50),

wherein the first limit value (54) is determined taking into account a first position (60) of the movable element (5) that forms a starting position and taking into account a first boundary condition for the movement of the movable element (5), wherein the first boundary condition indicates how far the movable element (5) may have at most moved away from the first position (60) by the predefined time,

- determining (111) a second limit value (55) of the partial range (52) of positions of the movable element (5) which are possible at the predefined time,

wherein the second limit value (55) is determined taking into account the first position (60) of the movable element (5) and taking into account a second boundary condition for the movement of the movable element (5),

wherein the second boundary condition indicates how far the movable element (5) may have at least moved away from the first position (60) by the predefined time,

- reading in (120) the measurement signal (20) captured at the predefined time,

- determining (130) a second position (62) of the movable element (5) as an end position from the measurement signal (20) taking into account only the partial range (52) of the positions which are possible at the predefined time.

2. Method (100) according to Claim 1,

wherein the first boundary condition is predefined by a mechanical boundary condition of the machine (3), in particular by a mass inertia of the movable element (5) and/or a driving force of a drive driving the movable element (5).

3. Method (100) according to one of the preceding claims,
wherein the first limit value (54) and the second limit value (55) are determined on the basis of the first position (60) of the movable element (5) and a speed of the movable element (5) in such a manner that the partial range (52) comprises an estimated position (64) of the movable element (5),
wherein the estimated position (64) is that position at which the movable element (5) would be situated at the predefined time if the movable element (5) moved without acceleration at the speed starting from the first position (60),
wherein a maximum acceleration of the movable element (5) is taken into account as the first boundary condition when determining (110) the first limit value (54),
wherein the first limit value (54) is determined in such a manner that a distance between the first position (60) and the first limit value (54) takes into account an acceleration of the movable element (5) with the maximum acceleration,
wherein a minimum acceleration of the movable element (5) is taken into account as the second boundary condition when determining (111) the second limit value (55),
wherein the second limit value (55) is determined in such a manner that a distance between the first position (60) and the second limit value (55) takes into account an acceleration of the movable element (5) with the minimum acceleration.

4. Method (100) according to Claim 3,
wherein the determination (110) of the first limit value (54), the determination (111) of the second limit value (55), the reading-in (120) of the measurement signal (20) and the determination (130) of the second position (62) are cyclically repeated, and
wherein the end position determined in a past cycle (101) is taken into account as the first position (60) in a current cycle (101) following the past cycle (101).

5. Method (100) according to Claim 4,
wherein the first limit value (54) is determined (110) taking into account the first position (60), an earlier position (58) of the movable element (5), a first period and a second period,
wherein the earlier position (58) was determined as the end position in a cycle (101) before last, preceding the past cycle (101), and was taken into account as the starting position in the past cycle (101),
wherein the first period indicates the time between the predefined time of the cycle (101) before last and the predefined time of the past cycle (101), wherein the second period indicates the time between the predefined time of the past cycle (101) and the predefined time of the current cycle (101).

6. Method (100) according to Claim 5,
wherein the speed is determined in a linearized manner from the difference between the first position (60) and the earlier position (58) determined in the cycle (101) before last.

7. Method (100) according to Claim 6,
wherein the first period and the second period are the same and correspond to a cycle time, wherein the distance between the first position (60) and the first limit value (54) is determined, taking into account the first position (60), the earlier position (58), the speed and the first acceleration, at least as

$$P_n - P_{n-1} + a_1 * \Delta t^2,$$

where $P_n$ denotes the first position (60), $P_{n-1}$ denotes the earlier position (58), $a_1$ denotes the first acceleration and $\Delta t$ denotes the cycle time.

8. Method (100) according to one of the preceding claims,
wherein the distance between the first position (60) and the first limit value (54) is estimated upwards when determining (110) the first limit value (54), and/or
wherein the distance between the first position (60) and the second limit value (55) is estimated downwards when determining (111) the second limit value (55).

9. Method (100) according to one of the preceding claims,
wherein the determination (130) of the second position (62) of the movable element (5) comprises a comparison (132) of the measurement signal (20) with stored measurement signals of a partial quantity of stored measurement signals,
wherein the partial quantity is contained in a total quantity of stored measurement signals,
wherein the stored measurement signals of the total quantity represent positions of the movable element (5) within the total range (50),
wherein the stored measurement signals of the partial quantity each represent only positions of the movable element (5) within the partial range (52) of the positions which are possible at the predefined time, and
wherein the partial quantity comprises fewer stored measurement signals than the total quantity.

**10.** Method (100) according to one of the preceding claims,
wherein positions of the movable element (5) within the total range (50) are represented by data elements (32) of a data structure (30),
wherein positions within the partial range (52) of the positions which are possible at the predefined time are represented by data elements (32) of a partial quantity (33) of the data elements (32) of the data structure (30),
wherein the first limit value (54) of the partial range (52) defines a first data element (34, 36) of the partial quantity (33) of the data structure (30),
wherein the second limit value (55) of the partial range (52) defines a second data element (34, 36) of the partial quantity (33) of the data structure (30),
wherein the partial quantity (33) comprises fewer data elements (32) than the entire data structure (30), and
wherein the second position (62) of the movable element (5) is determined (130) taking into account only the partial quantity (33) of the data elements (32) of the data structure (30).

**11.** Method (100) according to Claim 10,
wherein the method (100) comprises loading (122) the partial quantity (33) of the data elements (32) of the data structure (30) from a memory module (18) containing the data structure (30), and
wherein the data elements (32) of the partial quantity (33) of the data structure (30) are loaded (122) from the memory module (18) before determining (130) the second position (62).

**12.** System (10, 210) for determining the position of an element (5) of a machine (3) from a measurement signal (20), which element is movable within a total range (50),
wherein the system (10, 210) comprises an evaluation device (12, 212),
wherein the evaluation device (12, 212) is designed to determine a first limit value (54) of a partial range (52) of positions of the movable element (5) which are possible at a predefined time, said partial range being within the total range (50),
wherein the evaluation device (12, 212) is designed to determine the first limit value (54) taking into account a first position (60) of the movable element (5) that forms a starting position and taking into account a first boundary condition for the movement of the movable element (5),
wherein the first boundary condition indicates how far the movable element (5) may have at most moved away from the first position (60) by the predefined time,
wherein the evaluation device (12, 212) is designed to determine a second limit value (55) of the partial range (52),

wherein the evaluation device (12, 212) is designed to determine the second limit value (55) taking into account the first position (60) of the movable element (5) and taking into account a second boundary condition for the movement of the movable element (5),
wherein the second boundary condition indicates how far the movable element (5) may have at least moved away from the first position (60) by the predefined time,
wherein the evaluation device (12, 212) is designed to read in the measurement signal (20) captured at the predefined time,
wherein the evaluation device (12, 212) is designed to determine a second position (62) of the movable element (5) as an end position from the measurement signal (20) taking into account only the partial range (52) of the positions which are possible at the predefined time.

**13.** Position-determining system (10, 210) according to Claim 12,
wherein the evaluation device (12, 212) is designed to cyclically repeat the determination (110) of the first limit value (54), the determination (111) of the second limit value (55), the reading-in (120) of the measurement signal (20) and the determination (130) of the second position (62), and
wherein the evaluation device (12, 212) is designed to take into account the end position determined in a past cycle (101) as the first position (60) in a current cycle (101) following the past cycle (101).

**14.** Position-determining system (10, 210) according to either of Claims 12 and 13,
wherein the system (10, 210) comprises a memory module (18) which is connected to the evaluation device (12, 212),
wherein the memory module (18) is designed to store a data structure (30), the data elements (32) of which represent positions of the movable element (5) within the total range (50),
wherein the evaluation device (12, 212) is designed to load a partial quantity (33) of the data elements (32) of the data structure (30) from the memory module (18), with the result that the loaded data elements (32) of the partial quantity (33) represent only positions within the partial range (52) of the positions which are possible at the predefined time, and the partial quantity (33) comprises fewer data elements (32) than the entire data structure (30), wherein the first limit value (54) of the partial range (52) defines a first data element (34, 36) of the partial quantity of the data structure (30), wherein the second limit value (55) of the partial range (52) defines a second data element (34, 36) of the partial quantity (33) of the data structure (30),
wherein the evaluation device (12, 212) is designed to determine the second position (62) of the movable element (5) taking into account only the partial quantity (33) of the data elements (32) of the data structure (30), and
wherein the evaluation device (12, 212) is designed to load the partial quantity (33) of the data elements (32) of the data structure (30) from the memory module (18) before determining (130) the second position (62).

15. System (10, 210) according to one of Claims 12 to 14, wherein the system (10, 210) comprises the machine (3) with the element (5) which is movable within the total range (50).

16. System (10, 210) according to Claim 15, wherein the system (10, 210) is a drive and the machine (3) is an electric motor.


**Revendications**

1. Procédé (100) de détermination, à partir d'un signal de mesure (20), de la position d'un élément (5) d'une machine (3), qui est mobile à l'intérieur d'une zone globale (50),
dans lequel le procédé (100) comprend les étapes consistant à :

- déterminer (110) une première valeur limite (54) d'une zone partielle (52) située à l'intérieur de la zone globale (50) de positions de l'élément mobile (5), qui sont possibles à un instant prédéterminé,
dans lequel la première valeur limite (54) est déterminée en tenant compte d'une première position (60) de l'élément mobile (5) constituant une position initiale et en tenant compte d'une première condition limite pour le mouvement de l'élément mobile (5),
dans lequel la première condition limite indique la distance maximale que l'élément mobile (5) peut avoir parcourue depuis la première position (60) jusqu'à l'instant prédéterminé,
- déterminer (111) une deuxième valeur limite (55) de la zone partielle (52) de positions possibles de l'élément mobile (5) à l'instant prédéterminé,
dans lequel la deuxième valeur limite (55) est déterminée en tenant compte de la première position (60) de l'élément mobile (5) et d'une deuxième condition limite pour le mouvement de l'élément mobile (5),
dans lequel la deuxième condition limite indique la distance dont l'élément mobile (5) doit s'être déplacé au moins depuis la première position (60) jusqu'à l'instant prédéterminé,
- lire (120) le signal de mesure (20) détecté à l'instant prédéterminé,

- déterminer (130), à partir du signal de mesure (20), une deuxième position (62) de l'élément mobile (5) en tant que position finale en tenant compte uniquement de la zone partielle (52) des positions possibles à l'instant prédéterminé.

2. Procédé (100) selon la revendication 1,
dans lequel la première condition limite est prédéterminée par une condition limite mécanique de la machine (3), en particulier par une inertie de masse de l'élément mobile (5) et/ou une force motrice d'un mécanisme d'entraînement entraînant l'élément mobile (5).

3. Procédé (100) selon l'une des revendications précédentes,
dans lequel la première valeur limite (54) et la deuxième valeur limite (55) sont déterminées sur la base de la première position (60) de l'élément mobile (5) et d'une vitesse de l'élément mobile (5) de telle manière que la zone partielle (52) comprenne une position estimée (64) de l'élément mobile (5),
dans lequel la position estimée (64) est la position à laquelle l'élément mobile (5) se trouverait à l'instant prédéterminé si l'élément mobile (5) se déplaçait sans accélération à ladite vitesse depuis la première position (60),
dans lequel, lors de la détermination (110) de la première valeur limite (54), une accélération maximale de l'élément mobile (5) est prise en compte en tant que première condition limite,
dans lequel la première valeur limite (54) est déterminée de telle manière qu'une distance entre la première position (60) et la première valeur limite (54) prenne en compte une accélération de l'élément mobile (5) soumis à l'accélération maximale,
dans lequel, lors de la détermination (111) de la deuxième valeur limite (55), une accélération minimale de l'élément mobile (5) est prise en compte en tant que deuxième condition limite,
dans lequel la deuxième valeur limite (55) est déterminée de telle manière qu'une distance entre la première position (60) et la deuxième valeur limite (55) prenne en compte une accélération de l'élément mobile (5) soumis à l'accélération minimale.

4. Procédé (100) selon la revendication 3,
dans lequel la détermination (110) de la première valeur limite (54), la détermination (111) de la deuxième valeur limite (55), la lecture (120) du signal de mesure (20) et la détermination (130) de la deuxième position (62) sont répétées de manière cyclique et
dans lequel la position finale déterminée au cours d'un dernier cycle (101) est prise en compte au cours d'un cycle actuel (101) faisant suite au dernier cycle (101) en tant que première position (60).

**5.** Procédé (100) selon la revendication 4, dans lequel la détermination (110) de la première valeur limite (54) est effectuée en tenant compte de la première position (60), d'une position antérieure (58) de l'élément mobile (5), d'une première période de temps et d'une deuxième période de temps, dans lequel la position antérieure (58) a été déterminée au cours d'un avant-dernier cycle (101) qui précède le dernier cycle (101) en tant que position finale et prise en compte au cours du dernier cycle (101) en tant que position initiale, dans lequel la première période de temps indique le temps s'écoulant entre l'instant prédéterminé de l'avant-dernier cycle (101) et l'instant prédéterminé du dernier cycle (101), dans lequel la deuxième période de temps indique le temps s'écoulant entre l'instant prédéterminé du dernier cycle (101) et l'instant prédéterminé du cycle actuel (101).

**6.** Procédé (100) selon la revendication 5, dans lequel la vitesse est déterminée de manière linéarisée à partir de la différence entre la première position (60) et la position antérieure (58) déterminée au cours de l'avant-dernier cycle (101).

**7.** Procédé (100) selon la revendication 6, dans lequel la première période de temps et la deuxième période de temps sont égales et correspondent à un temps de cycle, dans lequel la distance entre la première position (60) et la première valeur limite (54), compte tenu de la première position (60), de la position antérieure (58), de la vitesse et de la première accélération, est déterminée comme étant au moins égale à

$$P_n - P_{n-1} + a_1 * \Delta t^2,$$

où $P_n$ désigne la première position (60), $P_{n-1}$ désigne la position antérieure (58), $a_1$ désigne la première accélération et $\Delta t$ désigne le temps de cycle.

**8.** Procédé (100) selon l'une des revendications précédentes, dans lequel, lors de la détermination (110) de la première valeur limite (54), la distance entre la première position (60) et la première valeur limite (54) est estimée vers le haut et/ou dans lequel, lors de la détermination (111) de la deuxième valeur limite (55), la distance entre la première position (60) et la deuxième valeur limite (55) est estimée vers le bas.

**9.** Procédé (100) selon l'une des revendications précédentes, dans lequel la détermination (130) de la deuxième position (62) de l'élément mobile (5) comprend une comparaison (132) du signal de mesure (20) à des signaux de mesure stockés d'un sous-ensemble de signaux de mesure stockés, dans lequel le sous-ensemble est contenu dans un ensemble global de signaux de mesure stockés, dans lequel les signaux de mesure stockés de l'ensemble global représentent des positions de l'élément mobile (5) à l'intérieur de la zone globale (50), dans lequel les signaux de mesure stockés du sous-ensemble représentant uniquement des positions de l'élément mobile (5) dans la zone partielle (52) des positions possibles à l'instant prédéterminé et dans lequel le sous-ensemble comprend moins de signaux de mesure stockés que l'ensemble global.

**10.** Procédé (100) selon l'une des revendications précédentes, dans lequel les positions de l'élément mobile (5) à l'intérieur de la zone globale (50) sont représentées par des éléments de données (32) d'une structure de données (30), dans lequel des positions situées à l'intérieur de la zone partielle (52) des positions possibles à l'instant prédéterminé sont représentées par des éléments de données (32) d'un sous-ensemble (33) des éléments de données (32) de la structure de données (30), dans lequel la première valeur limite (54) de la zone partielle (52) définit un premier élément de données (34, 36) du sous-ensemble (33) de la structure de données (30), dans lequel la deuxième valeur limite (55) de la zone partielle (52) définit un deuxième élément de données (34, 36) du sous-ensemble (33) de la structure de données (30), dans lequel le sous-ensemble (33) comprend moins d'éléments de données (32) que la structure de données globale (30) et dans lequel la détermination (130) de la deuxième position (62) de l'élément mobile (5) est effectuée en tenant compte uniquement du sous-ensemble (33) des éléments de données (32) de la structure de données (30).

**11.** Procédé (100) selon la revendication 10, dans lequel le procédé (100) comprend un chargement (122) du sous-ensemble (33) d'éléments de données (32) de la structure de données (30) depuis un module de mémoire (18) contenant la structure de données (30), et dans lequel le chargement (122) des éléments de données (32) du sous-ensemble (33) de la structure de données (30) depuis le module de mémoire (18) est effectué avant la détermination (130) de la deuxième position (62).

**12.** système (10, 210) de détermination, à partir d'un signal de mesure (20), de la position d'un élément (5) d'une machine (3), qui est mobile à l'intérieur d'une zone globale (50),

dans lequel le système (10, 210) comprend un dispositif d'évaluation (12, 212),

dans lequel le dispositif d'évaluation (12, 212) est conçu pour déterminer une première valeur limite (54) d'une zone partielle (52) située à l'intérieur de la zone globale (50) de positions de l'élément mobile (5), qui sont possibles à un instant prédéterminé,

dans lequel le dispositif d'évaluation (12, 212) est conçu pour déterminer la première valeur limite (54) en tenant compte d'une première position (60) de l'élément mobile (5) constituant une position initiale et en tenant compte d'une première condition limite pour le mouvement de l'élément mobile (5),

dans lequel la première condition limite indique la distance maximale que l'élément mobile (5) peut avoir parcourue depuis la première position (60) jusqu'à l'instant prédéterminé,

dans lequel le dispositif d'évaluation (12, 212) est conçu pour déterminer une deuxième valeur limite (55) de la zone partielle (52),

dans lequel le dispositif d'évaluation (12, 212) est conçu pour déterminer la deuxième valeur limite (55) en tenant compte de la première position (60) de l'élément mobile (5) et en tenant compte d'une deuxième condition limite pour le mouvement de l'élément mobile (5),

dans lequel la deuxième condition limite indique la distance dont l'élément mobile (5) doit s'être déplacé au moins depuis la première position (60) jusqu'à l'instant prédéterminé,

dans lequel le dispositif d'évaluation (12, 212) est conçu pour lire le signal de mesure (20) détecté à l'instant prédéterminé,

dans lequel le dispositif d'évaluation (12, 212) est conçu pour déterminer, à partir du signal de mesure (20), une deuxième position (62) de l'élément mobile (5) en tant que position finale en tenant compte uniquement de la zone partielle (52) des positions possibles à l'instant prédéterminé.

13. Système de détermination de position (10, 210) selon la revendication 12,

dans lequel le dispositif d'évaluation (12, 212) est conçu pour répéter cycliquement la détermination (110) de la première valeur limite (54), la détermination (111) de la deuxième valeur limite (55), la lecture (120) du signal de mesure (20) et la détermination (130) de la deuxième position (62), et

dans lequel le dispositif d'évaluation (12, 212) est conçu pour prendre en compte la position finale déterminée au cours d'un dernier cycle (101), au cours d'un cycle actuel (101) faisant suite au dernier cycle (101) en tant que première position (60).

14. Système (10, 210) de détermination de position selon l'une des revendications 12 à 13,

dans lequel le système (10, 210) comprend un module de mémoire (18) relié au dispositif d'évaluation (12, 212), dans lequel le module de mémoire (18) est conçu pour stocker une structure de données (30) dont les éléments de données (32) représentent des positions de l'élément mobile (5) dans la zone globale (50),

dans lequel le dispositif d'évaluation (12, 212) est conçu pour charger un sous-ensemble (33) des éléments de données (32) de la structure de données (30) depuis le module de mémoire (18), de telle manière que les éléments de données chargés (32) du sous-ensemble (33) représentent uniquement des positions situées à l'intérieur de la zone partielle (52) des positions possibles à l'instant prédéterminé et que le sous-ensemble (33) comprenne un nombre d'éléments de données (32) plus faible que la structure de données globale (30),

dans lequel la première valeur limite (54) de la zone partielle (52) définit un premier élément de données (34, 36) du sous-ensemble de la structure de données (30), dans lequel la deuxième valeur limite (55) de la zone partielle (52) définit un deuxième élément de données (34, 36) du sous-ensemble (33) de la structure de données (30),

dans lequel le dispositif d'évaluation (12, 212) est conçu pour déterminer la deuxième position (62) de l'élément mobile (5) en tenant compte uniquement du sous-ensemble (33) des éléments de données (32) de la structure de données (30) ; et

dans lequel le dispositif d'évaluation (12, 212) est conçu pour charger le sous-ensemble (33) des éléments de données (32) de la structure de données (30) depuis le module de mémoire (18) avant la détermination (130) de la deuxième position (62).

15. Système (10, 210) selon l'une des revendications 12 à 14, dans lequel le système (10, 210) comprend la machine (3) munie de l'élément (5) qui est mobile à l'intérieur la zone globale (50).

16. Système (10, 210) selon la revendication 15, dans lequel le système (10, 210) est un mécanisme d'entraînement et la machine (3) est un moteur électrique.

Fig. 1

EP 3 361 220 B1

**Fig. 2**

EP 3 361 220 B1

**Fig. 3**

**Fig. 4**

Fig. 5

EP 3 361 220 B1

**Fig. 6**

**Fig. 7**

**Fig. 8**

EP 3 361 220 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2937671 A1
- US 2012072169 A1
- DE 102011103735 A1
- DE 10050795 A1